# EUROPÄISCHE PATENTSCHRIFT

(11) **EP 2 889 587 B1**
(45) Veröffentlichungstag und Bekanntmachung des Hinweises auf die Patenterteilung: **23.10.2024**
(21) Anmeldenummer: 14193344.0
(22) Anmeldetag: 14.11.2014
(51) Int. Cl.: G01F 1/684, G01F 1/692

(54) **Vorrichtung zur Bestimmung eines Strömungsparameters eines Fluidstroms**
Device for determining a flow parameter of a fluid flow
Dispositif de détermination d'un paramètre d'écoulement d'un flux de liquide

(30) Priorität: 15.11.2013 DE 102013223372
(43) Veröffentlichungstag der Anmeldung: 01.07.2015
(73) Patentinhaber: Hahn-Schickard-Gesellschaft für angewandte Forschung e. V., 70569 Stuttgart (DE); GS Elektromedizinische Geräte G. Stemple GmbH, 86916 Kaufering (DE)
(72) Erfinder: Hedrich, Frank, 78052 Villingen-Schwenningen (DE); Storz, Matthias, 78647 Trossingen (DE); Kattinger, Gerhard, 78112 St. Georgen (DE); Billat, Sophie, 78052 Villingen-Schwenningen (DE); Bronner, Ralf, 76532 Baden-Baden (DE)
(74) Vertreter: Burger, Markus

(56) Entgegenhaltungen:
- EP-A1- 2 056 076
- EP-A2- 1 882 911
- DE-A1- 19 636 095
- JP-A- 2004 226 315
- JP-A- 2012 057 975
- US-A1- 2003 172 731

## Beschreibung

Die vorliegende Erfindung betrifft eine Vorrichtung zur Bestimmung eines Strömungsparameters eines Fluidstroms.

Strömungs- bzw. Durchflusssensoren zur Bestimmung eines Strömungsparameters, wie zum Beispiel einer Strömungsmenge, eines Massendurchflusses, eines Volumendurchflusses, einer Strömungsgeschwindigkeit eines Fluides sind in vielfältigen Ausführungsformen und mit unterschiedlichen Messprinzipien aus dem Stand der Technik bekannt. Das Fluid kann ein Gas oder eine Flüssigkeit sein. Das Gas oder die Flüssigkeit können mehrere unterschiedliche Bestandteile bzw. Stoffe aufweisen. Luft kann beispielsweise solch ein Gas bzw. Fluid sein, welches Wasserdampf enthält.

Strömungsmesser werden in vielfältigen technischen Gebieten, wie zum Beispiel der Luft- und Raumfahrt, der Fahrzeug- und Motorsteuerung, der Heiz- und Lüftungstechnik sowie in der industriellen Prozesstechnik eingesetzt. Wird beispielsweise Luft als Fluid betrachtet, so spricht man bei solch einem Strömungssensor häufig auch von einem Anemometer, einem Luftmassenmesser oder auch von einem Luft -Volumenstromsensor oder Luft-Massenstromsensor.

Strömungsmesser werden auch in der Medizintechnik eingesetzt, so wird beispielsweise in sogenannten Spirometern eine Atemgasmessung, d.h. die zeitlich aufgelöste Messung des Volumenstroms beim Ein- und Ausatmen bestimmt. Solch eine Atemgasmessung mit zeitlicher Auflösung des Volumenstroms beim Ein- und Ausatmen kann beispielsweise mit thermischen Strömungssensoren, insbesondere mit mikrotechnischen Membransensoren (MEMS Membransensoren), bei denen sich die wesentlichen Elemente wie Heizer und Temperatursensoren auf einer dünnen Membran befinden, durchgeführt werden.

Allgemein haben thermische Strömungssensoren den Vorteil, dass sie eine hohe Messempfindlichkeit bei geringer Strömungsgeschwindigkeit eines Fluides aufweisen.

Die Atemgasmessung mit thermischen Sensorelementen, insbesondere mit MEMS Membransensoren, weist die Vorteile einer hohen Messempfindlichkeit bei geringer Strömungsgeschwindigkeit zur Detektion des für die künstliche Beatmung wichtigen Umkehrpunktes zwischen Exspiration (Einatmung) und Inspiration (Ausatmung), einer hohen Messdynamik sowohl für den Strömungsmessbereich als auch einer zeitlich genauen Auflösung der hochdynamischen Atemkurven auf. Je geringer die thermische Masse des Sensors, desto höher ist dessen zeitliche Auflösung, die im Fall des MEMS Sensors rund 1 ms beträgt.

Bei der Atemgasmessung bzw. der zuverlässigen Volumenstrommessung mit thermischen Sensoren besteht die technische Herausforderung darin, dass das Exspirationsgas zu 100% mit Wasser gesättigt ist. Dadurch kann unter widrigen Betriebsbedingungen Betauung und erhöhte Aerosolbildung eintreten, da sich die Temperaturen von Schläuchen und der Messeinrichtung unter der Taupunkttemperatur befinden können.

MEMS Sensoren benötigen im Allgemeinen wesentlich weniger Energie als vergleichbare Dünnschicht-Sensoren und eignen sich deshalb besonders für den Batteriebetrieb in tragbaren Geräten. Jedoch liegt ihre Arbeitstemperatur im Gegensatz zu Dünnschicht-Sensoren üblicherweise unter 100°C, so dass auf dem Sensor abgeschiedene Wassertröpfchen das Messsignal nicht kompensierbar beeinflussen und damit zu falschen Messwerten oder gar zum völligen Zusammenbruch des Messsignals führen können. Die Heizenergie, die während des Sensorbetriebs vom Heizelement abgegeben wird, reicht nicht aus, um einen massiven Tropfen in angemessener Zeit wegheizen zu können. So bleiben Wasseransammlungen auf dem Sensor in der Regel stabil und verdampfen nicht. Eine Verdunstung kann aufgrund der maximalen Luftfeuchtigkeit während der Exspiration nur während der Inspiration stattfinden. Da ein Sensorausfall bei der Beatmung systemkritisch ist, darf eine fehlerhafte Messung aufgrund von Wasseransammlungen nur selten und dann nur für kurze Zeit (< 10s) eintreten.

Als MEMS Eintauchfühler zur Strömungsmessung trockener Gase hat sich seit einigen Jahren der sogenannte Kammerkopf-Sensor etabliert, der sich prinzipiell auch für die Verwendung in der Beatmungstechnik eignen würde. Bei diesem Sensor befindet sich das Sensorchip in einem kleinen Strömungskanal, der an der Spitze einer Sonde integriert ist. Zum Messen wird die Sonde bzw. deren Spitze mit der Öffnung der Kammer längs zur Gasströmung (z.B. in einer Rohrleitung) platziert, so dass ein definierter Teil der Strömung durch den kleinen Strömungskanal fließt und dort gemessen wird. Diese Anordnung kann auch als Rohr-in-Rohr Bypass bezeichnet werden.

Allerdings ist diese Messvorrichtung in Gegenwart von Aerosolen ungeeignet, da sich diese kapillar in der Kammer anlagern und das Sensorsignal zum Erliegen bringen können. Schließlich müsste die gesamte Messkammer mit ihrer relativ hohen thermischen Masse beheizt werden, um diese über dem Taupunkt zu temperieren. Das hätte eine signifikante Beeinflussung der Messgastemperatur zur Folge. Ein Aufheizen gar auf Verdampfungstemperatur wäre mit einem deutlich höheren Energieaufwand verbunden.

Aus der EP 1 882 911 A2 ist ein Durchflussmesser bekannt, der einen derartigen kapillaren Rohr-in-Rohr Bypass aufweist. Dieser Durchflussmesser ist folglich für die Atemgasmessung ungeeignet.

Weiterhin ist in der US 2003/0172731 A1 ein Durchflussmesser bekannt, der einen gebogenen kapillaren Rohr-in-Rohr Bypass beinhaltet. Hier ist die Gefahr einer kapillaren Anlagerung von Aerosolen noch größer.

In der JP 2012-57975 A ist ein Durchflussmesser gezeigt, bei dem der Sensor in einer Öffnung eines freistehenden Sensorfingers angeordnet ist. Auch hier besteht die Gefahr einer kapillaren Anlagerung von Aerosolen.

Aus der JP 2004-226315 A ist ein Durchflussmesser bekannt, der einen gebogenen Fluidkanal aufweist, so dass der Fluidstrom entlang einer spiralförmigen Hauptströmungslinie strömt.

Darüber hinaus ist aus der EP 2 056 076 A1 ein weiterer Durchflussmesser bekannt, der einen gebogenen kapillaren Bypass aufweist, der außerhalb des Strömungskanals angeordnet ist.

Gemäß der DE 196 36 095 A1 umfasst ein Messfühler für einen Luftmengenstrom eine Abfühlvorrichtung mit einer zentral angebrachten Heizvorrichtung, die sich zwischen zwei temperaturempfindlichen Abfühlelementen entlang einem Stromweg befindet, wobei die Abfühlvorrichtung zwischen einem ersten und zweiten Punkt entlang dem Stromweg im Wesentlichen flach ist und sich die Heizvorrichtung und die Abfühlelemente alle zwischen dem ersten und zweiten Punkt befinden; einen Stromlinienkörper mit einer bezüglich der Abfühlvorrichtung konvexen, gekrümmten Oberfläche, die der Abfühlvorrichtung zugewandt in einem vorbestimmten Abstand davon angeordnet ist, wobei sich die gekrümmte Oberfläche von vor dem ersten Punkt bis hinter den zweiten Punkt entlang dem Stromweg erstreckt, wobei der Stromlinienkörper bezüglich einer Mitte des Heizelements symmetrisch ist und wobei der Stromlinienkörper bewirkt, dass ein bidirektionaler Luftstrom auf die Abfühlvorrichtung unter einem Winkel so einfällt, dass der Luftstrom in dem Bereich der Abfühlelemente im Wesentlichen turbulenzfrei ist.

In der WO 2013/030 198 A1 ist eine Vorrichtung zur Bestimmung eines Strömungsparameters eines Fluidstroms mit einem thermischen MEMS Sensor beschrieben, der auch in Gegenwart von Betauung oder bei Abscheidung von Wassertröpfchen auf dem Sensor, beispielsweise durch mitgerissene Aerosole im Messgas, ein genaues Massestromsignal liefert. Dies wird durch einen freistehenden Sensorfinger erreicht, der in einem Winkel α von 5° bis 75° zu einer Hauptströmungslinie es Fluides im Messkanal angeordnet ist und vom Messmedium umströmt wird. Der MEMS Sensor enthält neben der thermischen Sensormembran zur Strömungsmessung eine weitere Membran, die zur dynamischen Temperaturmessung des Atemgases und zur Detektion von Feuchte verwendet werden kann. Über zusätzliche Kondensatheizer kann die notwendige Wärmemenge eingetragen werden, um Tropfen kurzfristig zu verdampfen, oder um den gesamten Sensorchip über den Taupunkt hinaus zu temperieren. Eine zur Temperaturmessung benutzte im Bulk-Silizium strukturierte Diode liefert gemeinsam mit der dynamischen Temperaturmessung auf der zweiten Membran die genaue Gastemperatur. Aus Massestrom, Gastemperatur und Gasdruck (externer Sensor) kann aufgrund der zeitlich genauen Messung über die Realgasgleichung der Volumenstrom berechnet werden.

Der Strömungssensor wird in der rohrgebundenen Messstrecke derart platziert, dass er mit seiner sensitiven Messfläche in einem Winkel α zur Hauptstromrichtung des Messfluides angestellt ist. Dadurch wird erreicht, dass das Fluid im thermischen Grenzschichtbereich gerichtet und weitgehend wirbelfrei über die Messmembran strömt. Die Winkelanstellung vermindert Strömungsabschattungen oder sich bis in den Membranbereich fortpflanzende Strömungswirbel, die durch die Anströmkante erzeugt werden und gewährleistet damit die Aufnahme zuverlässiger Strömungsmesswerte im Membranbereich des MEMS Sensors. Für eine bidirektionale Messung des Strömungsparameters werden zwei Sensorchips verwendet, die mit gleichem Winkelbetrag aber mit unterschiedlichem Vorzeichen angestellt sind.

Bei einer Vorrichtung zur bidirektionalen Messung des Strömungsparameters unter Verwendung nur eines Sensorchips ist der Sensorfinger in ein um 90° gebogenes Winkelrohr in einem Winkel von 45° eingebaut. Damit ist die gerichtete Anströmung von beiden Seiten möglich.

Allerdings kann dabei eine vermehrte Wirbelbildung durch Aufprall der Hauptströmung auf die äußere Innenwand des Kanals im Bogen beobachtet werden, die bei bestimmten Geschwindigkeiten unvorteilhafte Rückkopplungen der Turbulenzen auf die Sensorfläche zur Folge hat, so dass die erforderlich Genauigkeit der Messwerte nicht über den gesamten Geschwindigkeitsbereich gewährleistet werden kann.

Aufgabe der vorliegenden Erfindung ist es, eine derartige Vorrichtung zu verbessern.

Die Aufgabe wird durch die im Anspruch 1 angeführten Merkmale gelöst.

Bei dem Strömungssensor zum Erzeugen eines mit dem Strömungsparameter korrespondierenden elektrischen Signals handelt es sich um einen thermischen Strömungssensor, der darauf beruht, dass sich eine Temperaturverteilung in einem Bereich um ein Heizelement verändert, wenn der Bereich in thermischem Kontakt mit einem strömenden Fluid steht.

Der Strömungssensor weist einen Sensorchip auf, wobei der Sensorchip zumindest ein thermisches Membransensorelement aufweist, das ausgebildet ist, um einen Strömungsparameter des Fluides zu bestimmen. Darüber hinaus kann er zusätzlich dazu ausgebildet sein, um eine Fluidtemperatur, beispielsweise eine relative Fluidtemperatur oder eine absolute Fluidtemperatur zu bestimmen. Das thermische Membransensorelement weist zwei Temperaturfühler auf. Bei diesen Temperaturfühlern kann es sich beispielsweise um Thermoelemente, um Widerstandsstreifen beispielsweise mit Platin oder Nickel oder um Gruppen von Thermoelementen, sogenannte Thermopiles, handeln. Das thermische Membransensorelement besitzt eine Membran, die zwei zueinander beabstandete Temperaturfühler und ein zwischen den Temperaturfühler angeordnetes Heizelement aufweist. Der Sensorchip besitzt also ein thermisches Membransensorelement mit zwei zueinander beabstandeten Temperaturfühlern.

Der erste Temperaturfühler liefert dabei ein erstes temperaturabhängiges Signal und der zweite Sensor ein zweites temperaturabhängiges Signal. Aus den beiden temperaturabhängigen Signalen kann dann das mit dem Strömungsparameter korrespondierenden elektrischen Signal abgeleitet werden. Hierbei kann beispielsweise die Differenz oder der Quotient des ersten temperaturabhängigen Signals und des zweiten temperaturabhängigen Signals gebildet und als mit dem Strömungsparameter korrespondierendes elektrisches Signal verwendet werden. Die beiden temperaturabhängigen Signale können aber auch in anderer Weise verknüpft werden.

Thermischen Strömungssensoren, insbesondere solchen mit MEMS Membransensoren, weisen die Vorteile einer hohen Messempfindlichkeit bei geringer Strömungsgeschwindigkeit zur Detektion des für die künstliche Beatmung wichtigen Umkehrpunktes zwischen Exspiration (Einatmung) und Inspiration (Ausatmung), einer hohen Messdynamik sowohl für den Strömungsmessbereich als auch einer zeitlich genauen Auflösung der hochdynamischen Atemkurven auf. Je geringer die thermische Masse des Sensors, desto höher ist dessen zeitliche Auflösung, die im Fall des MEMS Sensors rund 1 ms und weniger betragen kann.

Der Fluidkanal mit einer Wandung zum Führen des Fluidstroms in einer Strömungsrichtung ist derart ausgebildet, dass das hindurchströmende Fluid quer zur Strömungsrichtung sicher geführt ist. Der Fluidkanal kann prinzipiell einen runden oder einen eckigen Querschnitt aufweisen. Weitere Querschnittformen sind jedoch möglich. Die Oberfläche des Sensorchips ist dabei innerhalb des Fluidkanals angeordnet, so dass die Oberfläche in thermischem Kontakt mit dem Fluidstrom steht. Der Fluidkanal ist dabei so ausgebildet, dass der Fluidstrom zu beiden Seiten des Sensorchips entlang einer selben geradlinigen Hauptströmungslinie geführt ist. Unter einer Hauptströmungslinie kann dabei eine Schwerpunktlinie des Fluidstroms verstanden werden. Sofern beispielsweise der Fluidkanal einen kreisförmigen Querschnitt aufweist, so verläuft die Schwerpunktlinie entlang der Mittelpunkte der die Querschnitte bildenden Kreise. Der Zustrom des Fluides zum Sensorchip erfolgt also längs einer Geraden und der Abfluss des Fluid es vom Sensorchip erfolgt längs der selben Geraden.

Eine Ausbildung des Fluidkanals, derart, dass der Fluidstrom dem Sensorchip entlang einer Geraden zufließt, und dass der Fluidstrom von dem Sensorchip entlang der selben Geraden abfließt, führt zu einer kompakten Bauform des Fluidkanals, was die Anwendung der Vorrichtung in der medizinischen Praxis erleichtert. Zudem wird so der Bildung von unerwünschten Turbulenzen im Fluidstrom im Bereich des Sensorchips entgegengewirkt, was der Messgenauigkeit zu Gute kommt und den Messbereich zu höheren Fluidgeschwindigkeiten hin erweitert.

Wandung des Fluidkanals kann einstückig oder mehrstückig ausgebildet sein.

Bei der erfindungsgemäßen Vorrichtung ist die Oberfläche des Sensorchips parallel zu der Hauptströmungslinie angeordnet. Weiterhin ist der Oberfläche des Sensorchips ein Strömungsumlenkelement zugeordnet, welches wenigstens einen Teilstrom des Fluidstroms so umlenkt, dass der Teilstrom schräg gegen die Oberfläche gerichtet ist. Auf diese Weise kann eine gleichmäßige an der Oberfläche des Sensorchips anliegende Fluidströmung erreicht werden, welche insbesondere über einen weiten Strömungsgeschwindigkeitsbereich frei von Wirbeln sein kann, so dass auch bei höheren Strömungsgeschwindigkeiten ein stabiler thermischer Kontakt zwischen der Oberfläche des Sensorchips und der Fluidströmung gewährleistet ist. Hierdurch kann eine hohe Messgenauigkeit auch bei hohen Strömungsgeschwindigkeiten gewährleistet werden. Fehlerhafte Messwerte können genauso wie ein Einbruch des Messesignals zuverlässig verhindert werden.

Das Strömungsumlenkelement kann einstückig mit der Wandung des Fluidkanals oder als separates Bauteil ausgebildet sein.

Im Gegensatz zu einer Strömungsführung mit einem Kammerkopfsensor benötigt die hier vorgeschlagene Messvorrichtung keine Seitenwände, welche die (Wasser-)Tropfen kapillar zurückhalten könnten. Zudem bleibt die thermische Masse, anders als beim Kammerkopfsensor, weiterhin auf das Minimum reduziert, da der Sensorchip und das Umlenkelement thermisch entkoppelt sein können, so dass eine geringe thermische Leistung ausreicht, um den Sensor über den Taupunkt zu temperieren.

Gemäß einer besonders bevorzugten Weiterbildung der Erfindung weist das Strömungsumlenkelement wenigstens eine Strömungsabrisskante für den Teilstrom auf, welche sich in einer parallel zu der Oberfläche verlaufenden Ebene quer zu der Hauptströmungslinie erstreckt.

Auf diese Weise kann erreicht werden, dass der Teilluftstrom in der Strömungsrichtung gesehen in einem Bereich vor der Strömungsabrisskante an dem Strömungsumlenkelement anliegt und sich an der Strömungsabrisskante von dem Strömungsumlenkelement ablöst. Hierdurch kann der Wirbelbildung über einen weiten Geschwindigkeitsbereich hinweg weiter entgegengewirkt werden, so dass die Messgenauigkeit weiter verbessert werden kann.

Beispielsweise erstreckt sich die wenigstens eine Strömungsabrisskante von einem ersten Bereich der Wandung bis zu einem zweiten Bereich der Wandung. Hierdurch kann verhindert werden, dass der Teilluftstrom zur Seite hin umgelenkt, also an der Oberfläche vorbei gelenkt, wird. Auf diese Weise kann sichergestellt werden, dass die Oberfläche stark und gleichmäßig vom Teilluftstrom angeströmt wird.

Gemäß einer vorteilhaften Weiterbildung der Erfindung verläuft die wenigstens eine Strömungsabrisskante auf einer gesamten Länge geradlinig. Hierdurch ergeben sich einerseits technische Vorteile und andererseits kann so eine besonders gleichmäßige Anströmung der Oberfläche gewährleistet werden. Die geradlinige Strömungsabrisskante kann insbesondere senkrecht zur Hauptströmungslinie verlaufen.

Gemäß einer vorteilhaften Weiterbildung der Erfindung ist das Strömungsumlenkelement so ausgebildet, dass der Teilstrom bei der Strömungsrichtung und bei einer entgegengesetzten Strömungsrichtung schräg gegen die Oberfläche gerichtet ist. Auf diese Weise wird eine Messung des Strömungsparameters sowohl dann möglich, wenn das Fluid in der ersten Strömungsrichtung fließt, als auch dann, wenn das Fluid in der entgegengesetzten zweiten Strömungsrichtung fließt. Die Vorrichtung ist damit für eine bidirektionale Messung geeignet.

Nach einer vorteilhaften Weiterbildung der Erfindung ist ein Spalt zwischen der Oberfläche und dem Strömungsumlenkelement in wenigstens einer Richtung senkrecht zu der Hauptströmungslinie und parallel zu der Oberfläche zur Oberfläche hin offen. Hierdurch kann ein sich in dem Spalt einlagerndes Kondensat seitlich aus dem Spalt abfließen, so dass durch Kondensate hervorgerufene Fehlmessungen vermieden werden können.

Gemäß einer zweckmäßigen Weiterbildung der Erfindung ist das Umlenkelement längs der Hauptströmungslinie betrachtet mittig zum thermischen Membransensorelement angeordnet. Dieses Merkmal trägt dazu bei, dass die Kennlinie des Strömungssensors zumindest betragsmäßig in beiden Strömungsrichtungen gleichartig verläuft, was die weitere Verarbeitung des elektrischen Signals des Strömungssensors vereinfacht.

Nach einer zweckmäßigen Weiterbildung der Erfindung ist das Strömungsumlenkelement in einem Schnitt parallel zu der Hauptströmungslinie und senkrecht zu der Oberfläche symmetrisch bezüglich einer senkrecht zu der Hauptströmungslinie verlaufenden Achse. Auch dieses Merkmal trägt dazu bei, dass die Kennlinie symmetrisch ausfällt.

Beispielsweise weist das Strömungsumlenkelement in einem Schnitt parallel zu der Hauptströmungslinie und senkrecht zu der Oberfläche eine dreieckförmige Form auf, wobei eine Spitze der dreieckförmigen Form der Oberfläche zugewandt ist, wobei bevorzugt eine von der Spitze ausgehende Seite der dreieckförmigen Form eine parallel zu der Hauptströmungslinie verlaufende Gerade unter einem Winkel von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet. Die dreieckförmige Ausbildung des Strömungsumlenkelements erleichtert die Herstellung der Vorrichtung und erzielt gleichzeitig ein wirbelfreies Anliegen des Teilstroms an der Oberfläche des Sensors. Dabei haben Versuche überraschend ergeben, dass der Geschwindigkeitsbereich, indem genaue Messungen möglich sind, dann am größten ist, wenn die von der Spitze ausgehenden Seiten der dreieckförmigen Form in Bezug auf die Hauptströmungslinie in einem Bereich um 45° angestellt sind.

Nach einer vorteilhaften Weiterbildung der Erfindung weist das Strömungsumlenkelement in einem Schnitt parallel zu der Hauptströmungslinie und senkrecht zu der Oberfläche eine trapezförmige Form auf, wobei eine kürzere Grundseite der trapezförmigen Form der Oberfläche zugewandt ist, wobei bevorzugt eine von der kürzeren Grundseite ausgehende Seite der trapezförmigen Form eine parallel zu der Hauptströmungslinie verlaufende Gerade unter einem Winkel von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet. Auch die trapezförmige Ausbildung des Strömungsumlenkelements erleichtert die Herstellung der Vorrichtung und erzielt gleichzeitig ein wirbelfreies Anliegen des Teilstroms an der Oberfläche des Sensors. Auch dabei haben Versuche überraschend ergeben, dass der Geschwindigkeitsbereich, indem genaue Messungen möglich sind, dann am größten ist, wenn die von der kürzeren Grundseite ausgehenden Seiten der trapezförmigen Form in Bezug auf die Hauptströmungslinie in einem Bereich um 45° angestellt sind.

Beispielsweise weist das Strömungsumlenkelement in einem Schnitt parallel zu der Hauptströmungslinie HSL und senkrecht zu der Oberfläche eine sechseckförmige Form auf, wobei eine erste Seite der sechseckförmigen Form parallel zu der Oberfläche ausgebildet und der Oberfläche zugewandt ist, wobei bevorzugt eine von der ersten Seite ausgehende Seite der sechseckförmigen Form eine parallel zu der Hauptströmungslinie verlaufende Gerade unter einem Winkel α von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet. Auch die sechseckige Ausbildung des Strömungsumlenkelements erleichtert die Herstellung der Vorrichtung und erzielt gleichzeitig ein wirbelfreies Anliegen des Teilstroms an der Oberfläche des Sensors. Auch dabei haben Versuche überraschend ergeben, dass der Geschwindigkeitsbereich, indem genaue Messungen möglich sind, dann am größten ist, wenn die von der parallel zu der Oberfläche ausgebildeten und der Oberfläche zugewandten Seite ausgehenden Seiten der sechseckförmigen Form in Bezug auf die Hauptströmungslinie in einem Bereich um 45° angestellt sind.

Beispielsweise weist das Strömungsumlenkelement 6 in einem Schnitt parallel zu der Hauptströmungslinie HSL und senkrecht zu der Oberfläche 2 eine rautenförmige Form auf, wobei eine Spitze der rautenförmigen Form der Oberfläche 2 zugewandt ist, wobei bevorzugt eine von der Spitze ausgehende Seite der rautenförmigen Form eine parallel zu der Hauptströmungslinie HSL verlaufende Gerade unter einem Winkel α von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet. Auch dabei haben Versuche überraschend ergeben, dass der Geschwindigkeitsbereich, indem genaue Messungen möglich sind, dann am größten ist, wenn die von der Spitze ausgehenden Seiten der rautenförmigen Form in Bezug auf die Hauptströmungslinie in einem Bereich um 45° angestellt sind.

Gemäß einer vorteilhaften Weiterbildung der Erfindung ist das Strömungsumlenkelement so in dem Fluidkanal angeordnet, dass zwischen einer dem Sensorchip abgewandte Seite des Strömungsumlenkelements und der Wandung des Fluidkanals ein freier Querschnitt vorhanden ist und/oder dass zwischen einer dem Strömungsumlenkelement abgewandte Seite des Sensorchips und der Wandung des Fluidkanals ein freier Querschnitt vorhanden ist. Auf diese Weise kann erreicht werden, dass lediglich ein geringer Teilstrom des Fluidstroms durch den Spalt zwischen der Oberfläche des Sensorchips und dem Umlenkelement hindurch fließt. Der größere Teil des Fluidstroms kann dabei außerhalb des Spalts fließen. Hierdurch kann eine geringe energetische Beeinflussung des Fluidstroms erreicht werden, was zu einem geringen Strömungswiderstand und zu genauen Messergebnissen führen.

Nach einer vorteilhaften Weiterbildung der Erfindung ist das Strömungsumlenkelement und/oder der Sensorchip so in dem Fluidkanal angeordnet, dass es oder er einen Teil der Wandung bildet. Auf diese Weise wird die Stabilität der Vorrichtung erhöht und die Herstellung der selben vereinfacht.

Beispielsweise beträgt ein minimaler Abstand zwischen der Oberfläche und dem Umlenkelement wenigstens 0,5 mm, bevorzugt wenigstens 0,6 mm, besonders bevorzugt wenigstens 0,8 mm, und/oder höchstens 2,0 mm, bevorzugt höchstens 1,5 mm, besonders bevorzugt höchstens 1,2 mm. Wie Versuche überraschend gezeigt haben, können insbesondere bei der Messung eines Strömungsparameters eines Atemgases besonders gute Ergebnisse erreicht werden, wenn der minimale Abstand zwischen der Oberfläche und dem Umlenkelement in einem Bereich um 1 mm herum liegt. So können in diesem Fall hoch genaue Messwerte in einem weiten Geschwindigkeitsbereich gewonnen werden, wobei eine störende Kondensatbildung kaum auftritt.

Nach einer vorteilhaften Weiterbildung der Erfindung beträgt eine Summe der Querschnittsfläche des Strömungssensors in dem Fluidkanal und der Querschnittsfläche des Umlenkelements in dem Fluidkanal in einer Ebene senkrecht zu der Hauptströmungslinie höchstens 50%, bevorzugt höchstens 30%, besonders bevorzugt höchstens 10%, der durch die Wandung des Fluidkanals begrenzten Querschnittsfläche. Auf diese Weise kann die energetische Beeinflussung des Fluidstrom auf einen tolerierbaren Wert herabgesetzt werden.

Nach der Erfindung ist das Umlenkelement als freistehender Umlenkfinger ausgebildet. Auch hierdurch kann die energetische Beeinflussung des Fluidstroms ebenso wie die Gefahr einer Kondensatbildung weiter verringert werden

Gemäß der Erfindung ist das thermische Membransensorelement an einem freistehenden Sensorfinger angeordnet. Hierdurch kann die energetische Beeinflussung des Fluidstroms ebenso wie die Gefahr einer Kondensatbildung weiter verringert werden. Der freistehende Sensorfinger kann dabei durch den Sensorchip selbst gebildet sein. Ebenso ist es möglich, dass der freistehende Sensorfinger durch einen Träger für den Sensorchip, beispielsweise aus Glas, und durch den Sensorchip gebildet wird.

Nach einer zweckmäßigen Weiterbildung der Erfindung ist eine Erstreckung des Sensorfingers in einer Richtung senkrecht zur Hauptströmungslinie und parallel zu der Oberfläche mindestens dreimal so groß, bevorzugt viermal so groß, besonders bevorzugt fünfmal so groß, als eine Erstreckung des Sensorfingers in einer Richtung parallel zur Hauptströmungslinie. Bei dem Sensorfinger kann es sich um einen länglich ausgebildeten Sensorfinger handeln, bei dem beispielsweise die senkrecht zur Hauptströmungslinie und parallel zu der Oberfläche verlaufende Längsseite 6 mm beträgt und die parallel zur Hauptströmungslinie verlaufende Breite 2 mm. In einigen Ausführungsbeispielen ist also eine Längskante des Sensorfingers dreimal oder noch länger als die Schmalseite W des Sensorfingers, um die sensitiven Elemente in der Strömung freistehend und außerhalb des strömungstechnisch störenden Übergangs zur mechanischen Verankerung des Sensorfingers platzieren zu können.

Gemäß einer zweckmäßigen Weiterbildung der Erfindung ist das Membransensorelement in einem ersten Drittel der Oberfläche an einem freien Ende des Sensorfingers angeordnet, wobei das freie Ende des Sensorfingers einem zweiten Ende des Sensorfingers, an dem elektrische Zuleitungen an den Sensorfinger angeschlossen sind, gegenüberliegt. Die aktiven sensorischen Elemente können im ersten Drittel der Fingerfläche am freien Ende des Sensorfingers angeordnet sein. Damit wird eine Strömungsmessung möglichst wenig durch die elektrische bzw. mechanische Verbindung zum Rumpf bzw. Messkopf des Sensorfingergehäuses beeinflusst.

Beispielsweise ist eine dem in der ersten Strömungsrichtung fließenden Fluid zugewandte Seite des Strömungssensors und/oder eine dem in der zweiten Strömungsrichtung fließenden Fluid zugewandte Seite des Strömungssensors so geformt, dass sich der Querschnitt des Fluidkanals in der jeweiligen Strömungsrichtung verengt. Auf diese Weise kann eine geringe energetische Beeinflussung des Fluidstroms erreicht werden, was zu einem geringen Strömungswiderstand und zu genauen Messergebnissen führen.

Gemäß der Erfindung ist der Strömungsparameter eine Strömungsmenge, ein Massendurchfluss, ein Volumendurchfluss und/oder eine Strömungsgeschwindigkeit des Fluidstroms. Die Strömungsmenge gibt dabei an, welche absolute Menge des Fluides in einem bestimmten Zeitintervall durch die Vorrichtung hindurch geflossen ist. Der Massendurchfluss gibt an, welche Masse des Fluides bezogen auf die Zeit durch die Vorrichtung fließt. Weiterhin gibt der Volumendurchfluss an, welches Volumen des Fluid bezogen auf die Zeit durch die Vorrichtung hindurch tritt. Strömungsgeschwindigkeit gibt schließlich an, mit welcher Geschwindigkeit der Fluidstrom fließt.

Die vorstehend erläuterten und/oder in den Unteransprüchen wiedergegebenen vorteilhaften Aus- und Weiterbildungen der Erfindung können dabei, außer z. B. in den Fällen eindeutiger Abhängigkeiten oder unvereinbarer Alternativen, einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen, jeweils in einer schematischen Prinzipskizze:
- Fig. 1a: eine erste Ansicht eines ersten Ausführungsbeispiels einer nicht erfindungsgemäßen Vorrichtung, wobei eine dreidimensionale geschnittene Darstellung einer Unterseite der Vorrichtung in einer Ansicht von schräg oben gezeigt ist;
- Fig. 1b: eine zweite Ansicht des ersten Ausführungsbeispiels einer nicht erfindungsgemäßen Vorrichtung, wobei eine dreidimensionale geschnittene Darstellung einer Oberseite der Vorrichtung in einer Ansicht von schräg unten gezeigt ist;
- Fig. 2a: eine dritte Ansicht des ersten Ausführungsbeispiels einer nicht erfindungsgemäßen Vorrichtung, wobei eine zweidimensionale längsgeschnittene Darstellung gezeigt ist;
- Fig. 2b: eine vierte Ansicht des ersten Ausführungsbeispiels einer nicht erfindungsgemäßen Vorrichtung, wobei eine zweidimensionale quer geschnittene Darstellung gezeigt ist;
- Fig. 2c: eine fünfte Ansicht des ersten Ausführungsbeispiels einer nicht erfindungsgemäßen Vorrichtung, wobei eine zweidimensionale längsgeschnittene Darstellung gezeigt ist;
- Fig. 2d: eine sechste Ansicht des ersten Ausführungsbeispiels einer nicht erfindungsgemäßen Vorrichtung, wobei eine zweidimensionale quer geschnittene Darstellung gezeigt ist;
- Fig. 3a: eine erste Ansicht eines zweiten Ausführungsbeispiels einer nicht erfindungsgemäßen Vorrichtung, wobei eine zweidimensionale längsgeschnittene Darstellung gezeigt ist;
- Fig. 3b: eine zweite Ansicht des zweiten Ausführungsbeispiels einer nicht erfindungsgemäßen Vorrichtung, wobei eine zweidimensionale quer geschnittene Darstellung gezeigt ist;
- Fig. 3c: eine erste Ansicht eines dritten Ausführungsbeispiels einer nicht erfindungsgemäßen Vorrichtung, wobei eine zweidimensionale längsgeschnittene Darstellung gezeigt ist;
- Fig. 3d: eine zweite Ansicht des dritten Ausführungsbeispiels einer nicht erfindungsgemäßen Vorrichtung, wobei eine zweidimensionale quer geschnittene Darstellung gezeigt ist;
- Fig. 3e: eine erste Ansicht eines vierten Ausführungsbeispiels einer nicht erfindungsgemäßen Vorrichtung, wobei eine zweidimensionale längsgeschnittene Darstellung gezeigt ist;
- Fig. 3f: eine zweite Ansicht des vierten Ausführungsbeispiels einer nicht erfindungsgemäßen Vorrichtung, wobei eine zweidimensionale quer geschnittene Darstellung gezeigt ist;
- Fig. 4a: eine erste Ansicht eines fünften Ausführungsbeispiels einer nicht erfindungsgemäßen Vorrichtung, wobei eine zweidimensionale längsgeschnittene Darstellung gezeigt ist;
- Fig. 4b: eine zweite Ansicht des fünften Ausführungsbeispiels einer nicht erfindungsgemäßen Vorrichtung, wobei eine zweidimensionale quer geschnittene Darstellung gezeigt ist;
- Fig. 4c: eine erste Ansicht eines sechsten Ausführungsbeispiels einer nicht erfindungsgemäßen Vorrichtung, wobei eine zweidimensionale längsgeschnittene Darstellung gezeigt ist;
- Fig. 4d: eine zweite Ansicht des sechsten Ausführungsbeispiels einer nicht erfindungsgemäßen Vorrichtung, wobei eine zweidimensionale quer geschnittene Darstellung gezeigt ist;
- Fig. 5: eine dreidimensionale Darstellung des Strömungssensors der vorangegangenen Ausführungsbeispiele der Vorrichtung;
- Fig. 6a-c: eine schematische Darstellung eines Sensorchips für einen erfindungsgemäßen Strömungssensor sowie ein thermisches Membransensorelement und eines darauf befindlichen Thermopiles;
- Fig. 7: ein Diagramm zur Verdeutlichung der Arbeitsweise eines thermischen Strömungssensors nach Sven Zinober (Redundanzstrukturen zur Erhöhung der Sicherheit und Zuverlässigkeit von Mikrosystemen, Dissertation, Albert-Ludwig-Universität Freiburg i. Breisgau, 09.07.2002); und
- Fig. 8: ein Diagramm simulatorisch ermittelter Kennlinien unterschiedliche Ausführungsbeispiele der erfindungsgemäßen Vorrichtung.

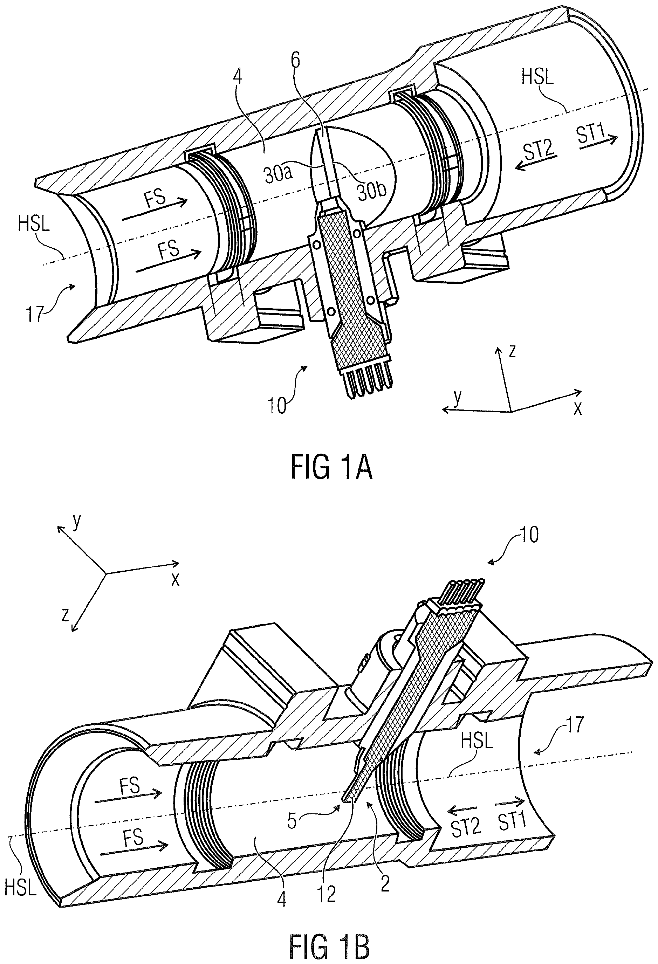

Die Figur 1a zeigt eine erste Ansicht eines ersten Ausführungsbeispiels einer Vorrichtung 1 zur Bestimmung eines Strömungsparameters eines Fluidstroms, insbesondere eines Atemgasstroms, wobei eine dreidimensionale geschnittene Darstellung einer Unterseite der Vorrichtung 1 in einer Ansicht von schräg oben gezeigt ist. Weiterhin zeigt die Figur 1b eine zweite Ansicht des ersten Ausführungsbeispiels einer Vorrichtung 1, wobei eine dreidimensionale geschnittene Darstellung einer Oberseite der Vorrichtung 1 in einer Ansicht von schräg unten gezeigt ist. Dabei ist der Strömungssensor 10 zur Verdeutlichung seiner Lage in der Vorrichtung 1 sowohl in der Figur 1a als auch in der Figur 1b gezeigt. Tatsächlich umfasst die Vorrichtung 1 des ersten Ausführungsbeispiels lediglich einen Strömungssensor. Die gesamte erfindungsgemäße Vorrichtung wird dadurch erhalten, indem die in der Figur 1a gezeigte Unterseite und die in der Figur 1b gezeigte Oberseite zusammengefügt wird.

Die Vorrichtung 1 zur Bestimmung eines Strömungsparameters VD eines Fluidstroms FS, insbesondere eines Atemgasstroms, umfasst damit einen Strömungssensor 10 zum Erzeugen eines mit dem Strömungsparameter VD korrespondierenden elektrischen Signals, der einen Sensorchip 5 aufweist, der eine im Wesentlichen ebene Oberfläche 2 aufweist, an welcher ein thermisches Membransensorelement 12 angeordnet ist, wobei das thermische Membransensorelement 12 einen ersten Temperaturfühler, einen zweiten Temperaturfühler sowie ein zwischen den Thermoelementen angeordnetes Heizelement aufweist.

Weiterhin umfasst die Vorrichtung 1 einen Fluidkanal 17 mit einer Wandung 4 zum Führen des Fluidstroms FS in einer Strömungsrichtung ST1, in welchem die Oberfläche 2 des Sensorchips 5 angeordnet ist, wobei der Fluidkanal 17 so ausgebildet ist, dass der Fluidstrom FS in der Strömungsrichtung ST1 betrachtet zu beiden Seiten des Sensorchips 5 entlang einer selben geradlinigen Hauptströmungslinie HSL strömt.

Dabei ist die Oberfläche 2 des Sensorchips 5 parallel zu der Hauptströmungslinie HSL angeordnet, wobei der Oberfläche 2 des Sensorchips 5 ein Strömungsumlenkelement 6 zugeordnet ist, welches wenigstens einen Teilstrom des Fluidstroms FS so umlenkt, dass der Teilstrom schräg gegen die Oberfläche 2 gerichtet ist.

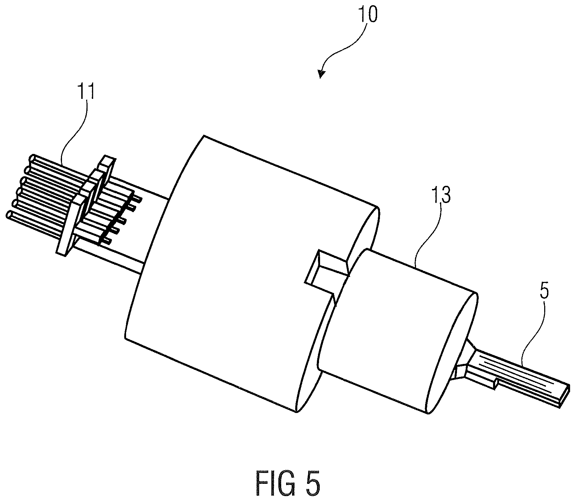

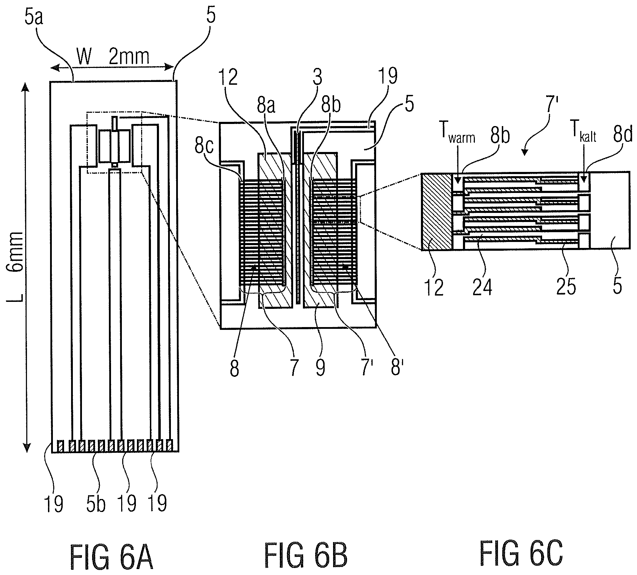

Bei dem Strömungssensor 10 zum Erzeugen eines mit dem Strömungsparameter VD korrespondierenden elektrischen Signals handelt es sich um einen thermischen Strömungssensor 10, der darauf beruht, dass sich eine Temperaturverteilung in einem Bereich um ein Heizelement 3 verändert, wenn der Bereich in thermischem Kontakt mit einem strömenden Fluid steht. Der Strömungssensor 10 wird weiter unten anhand der Figuren 5 und 6 näher erläutert.

Gemäß einer besonders bevorzugten Weiterbildung der Erfindung weist das Strömungsumlenkelement 6 wenigstens eine Strömungsabrisskante 30a, 30b für den Teilstrom UTS auf, welche sich in einer parallel zu der Oberfläche 2 verlaufenden Ebene quer zu der Hauptströmungslinie HSL erstreckt.

Auf diese Weise kann erreicht werden, dass der Teilluftstrom UTS in der Strömungsrichtung ST1 gesehen in einem Bereich vor der Strömungsabrisskante 30a, 30b an dem Strömungsumlenkelement 6 anliegt und sich an der Strömungsabrisskante 30a. 30b von dem Strömungsumlenkelement 6 ablöst. Hierdurch kann der Wirbelbildung über einen weiten Geschwindigkeitsbereich hinweg weiter entgegengewirkt werden, so dass die Messgenauigkeit weiter verbessert werden kann.

Beispielsweise erstreckt sich die wenigstens eine Strömungsabrisskante 30a, 30b von einem ersten Bereich der Wandung 4 bis zu einem zweiten Bereich der Wandung 4. Hierdurch kann verhindert werden, dass der Teilluftstrom UTS zur Seite hin umgelenkt, also an der Oberfläche 2 vorbei gelenkt, wird. Auf diese Weise kann sichergestellt werden, dass die Oberfläche 2 stark und gleichmäßig vom Teilluftstrom UTS angeströmt wird.

Gemäß einer vorteilhaften Weiterbildung der Erfindung verläuft die wenigstens eine Strömungsabrisskante (30a, 30b) auf einer gesamten Länge geradlinig. Hierdurch ergeben sich einerseits technische Vorteile und andererseits kann so eine besonders gleichmäßige Anströmung der Oberfläche 2 gewährleistet werden. Die geradlinige Strömungsabrisskante 30a, 30b kann insbesondere senkrecht zur Hauptströmungslinie HSL verlaufen.

Gemäß der Erfindung ist der Strömungsparameter VD eine Strömungsmenge, ein Massendurchfluss, ein Volumendurchfluss VD und/oder eine Strömungsgeschwindigkeit des Fluidstroms FS. Die Strömungsmenge gibt dabei an, welche absolute Menge des Fluides in einem bestimmten Zeitintervall durch die Vorrichtung hindurch geflossen ist. Der Massendurchfluss gibt an, welche Masse des Fluides bezogen auf die Zeit durch die Vorrichtung fließt. Weiterhin gibt der Volumendurchfluss VD an, welches Volumen des Fluid bezogen auf die Zeit durch die Vorrichtung 1 hindurch tritt. Strömungsgeschwindigkeit gibt schließlich an, mit welcher Geschwindigkeit der Fluidstrom FS fließt.

Der Fluidkanal 17 mit einer Wandung 4 zum Führen des Fluidstroms FS in einer Strömungsrichtung ST1 ist derart ausgebildet, dass das hindurchströmende Fluid quer zur Strömungsrichtung ST1 sicher geführt ist. Der Fluidkanal 17 kann prinzipiell einen runden oder einen eckigen Querschnitt aufweisen. Weitere Querschnittformen sind jedoch möglich. Die Oberfläche 2 des Sensorchips 5 ist dabei innerhalb des Fluidkanals 17 angeordnet, so dass die Oberfläche 2 in thermischem Kontakt mit dem Fluidstrom FS steht. Der Fluidkanal 17 ist dabei so ausgebildet, dass der Fluidstrom FS zu beiden Seiten des Sensorchips 5 entlang einer selben geradlinigen Hauptströmungslinie HSL geführt ist. Unter einer Hauptströmungslinie HSL kann dabei eine Schwerpunktlinie des Fluidstroms FS verstanden werden. Sofern beispielsweise der Fluidkanal 17 einen kreisförmigen Querschnitt aufweist, so verläuft die Schwerpunktlinie entlang der Mittelpunkte der die Querschnitte bildenden Kreise. Der Zustrom des Fluides zum Sensorchip 5 erfolgt also längs einer Geraden und der Abfluss des Fluid es vom Sensorchip 5 erfolgt längs der selben Geraden.

Eine Ausbildung des Fluidkanals 17, derart, dass der Fluidstrom FS dem Sensorchip 5 entlang einer Geraden zufließt, und dass der Fluidstrom FS von dem Sensorchip 5 entlang der selben Geraden abfließt, führt zu einer kompakten Bauform des Fluidkanals 17, was die Anwendung der Vorrichtung 1 in der medizinischen Praxis erleichtert. Zudem wird so der Bildung von unerwünschten Turbulenzen im Fluidstrom FS im Bereich des Sensorchips auf fünf entgegengewirkt, was der Messgenauigkeit zu Gute kommt und den Messbereich zu höheren Fluidgeschwindigkeiten hin erweitert.

Die Wandung 4 des Fluidkanals 17 kann einstückig oder mehrstückig ausgebildet sein.

Bei der erfindungsgemäßen Vorrichtung 1 ist die Oberfläche 2 des Sensorchips 5 parallel zu der Hauptströmungslinie HSL angeordnet. Weiterhin ist der Oberfläche 2 des Sensorchips 5 ein Strömungsumlenkelement 6 zugeordnet, welches wenigstens einen Teilstrom des Fluidstroms FS so umlenkt, dass der Teilstrom schräg gegen die Oberfläche 2 gerichtet ist. Auf diese Weise kann eine gleichmäßige an der Oberfläche 2 des Sensorchips 5 anliegende Fluidströmung FS erreicht werden, welche insbesondere über einen weiteren Strömungsgeschwindigkeitsbereich frei von Wirbeln sein kann, so dass auch bei höheren Strömungsgeschwindigkeiten ein stabiler thermischer Kontakt zwischen der Oberfläche 2 des Sensorchips 5 und der Fluidströmung FS gewährleistet ist. Hierdurch kann eine hohe Messgenauigkeit auch bei hohen Strömungsgeschwindigkeiten gewährleistet werden. Fehlerhafte Messwerte können genauso wie ein Einbruch des Messesignals zuverlässig verhindert werden.

Das Strömungsumlenkelement 6 kann einstückig mit der Wandung 4 des Fluidkanals 17 oder als separates Bauteil ausgebildet sein.

Im Gegensatz zu einer Strömungsführung mit einem Kammerkopfsensor benötigt die hier vorgeschlagene Messvorrichtung 1 keine Seitenwände, welche die (Wasser-)Tropfen kapillar zurückhalten könnten. Zudem bleibt die thermische Masse, anders als beim Kammerkopfsensor, weiterhin auf das Minimum reduziert, da der Sensorchip 5 und das Umlenkelement 6 thermisch entkoppelt sein können, so dass eine geringe thermische Leistung ausreicht, um den Sensorchip 5 über den Taupunkt zu temperieren.

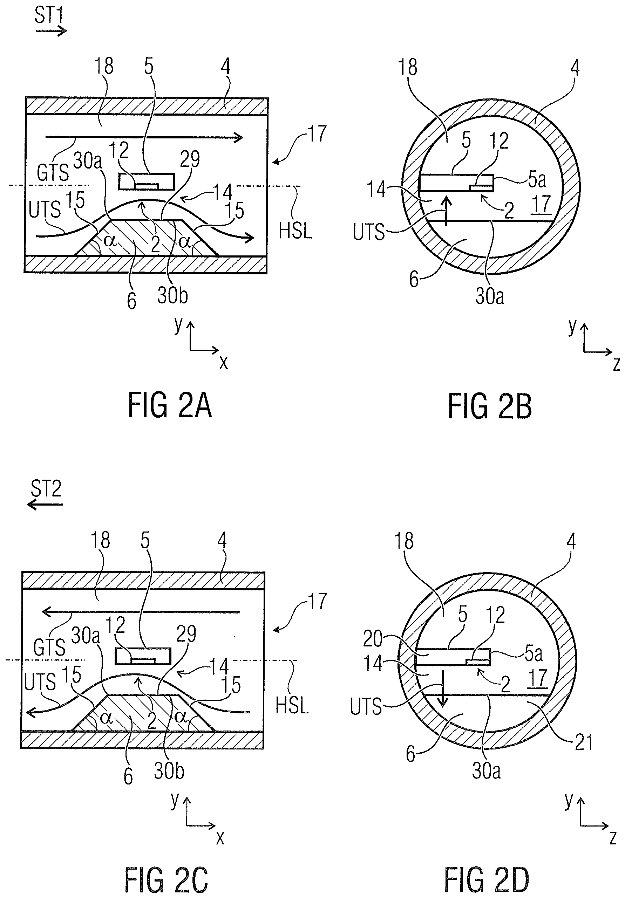

Fig. 2a zeigt eine dritte Ansicht des ersten Ausführungsbeispiels einer Vorrichtung 1, wobei eine zweidimensionale längsgeschnittene Darstellung gezeigt ist. Fig. 2b zeigt eine vierte Ansicht des ersten Ausführungsbeispiels einer Vorrichtung, wobei eine zweidimensionale quer geschnittene Darstellung der Vorrichtung 1 der Figur 2a gezeigt ist.

Nach einer vorteilhaften Weiterbildung der Erfindung ist ein Spalt 14 zwischen der Oberfläche 2 und dem Strömungsumlenkelement 6 in wenigstens einer Richtung senkrecht zu der Hauptströmungslinie HSL und parallel zu der Oberfläche 2 zur Oberfläche hin offen. Hierdurch kann ein sich in dem Spalt 14 einlagerndes Kondensat seitlich aus dem Spalt 14 abfließen, so dass durch Kondensate hervorgerufene Fehlmessungen vermieden werden können.

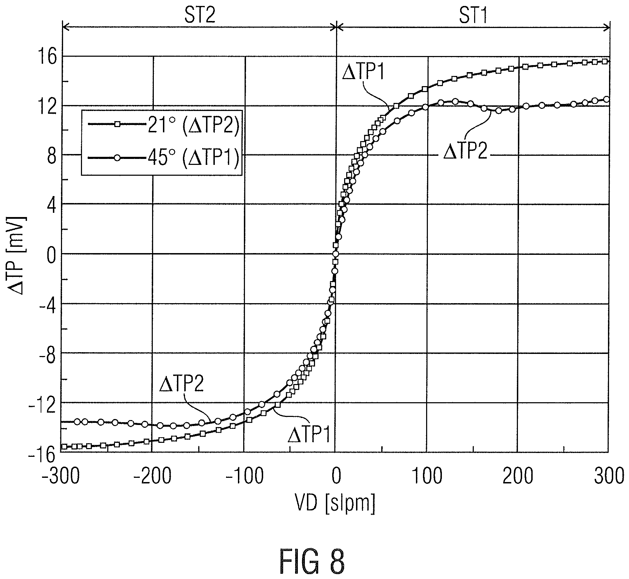

Nach einer zweckmäßigen Weiterbildung der Erfindung ist das Strömungsumlenkelement 6 in einem Schnitt parallel zu der Hauptströmungslinie HSL und senkrecht zu der Oberfläche 2 symmetrisch bezüglich einer senkrecht zu der Hauptströmungslinie HSL verlaufenden Achse. Auch dieses Merkmal trägt dazu bei, dass die Kennlinie des Strömungssensors 10 symmetrisch ausfällt. Beispielhafte derartige Kennlinien sind weiter unten anhand der Figur 8 erläutert.

Nach einer vorteilhaften Weiterbildung der Erfindung weist das Strömungsumlenkelement 6 in einem Schnitt parallel zu der Hauptströmungslinie HSL und senkrecht zu der Oberfläche 2 eine trapezförmige Form auf, wobei eine kürzere Grundseite 29 der trapezförmigen Form der Oberfläche 2 zugewandt ist, wobei bevorzugt eine von der kürzeren Grundseite 29 ausgehende Seite 15 der trapezförmigen Form eine parallel zu der Hauptströmungslinie HSL verlaufende Gerade unter einem Winkel α von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet. Die trapezförmige Ausbildung des Strömungsumlenkelements 6 erleichtert die Herstellung der Vorrichtung und erzielt gleichzeitig ein wirbelfreies Anliegen des Teilstroms an der Oberfläche 2 des Sensors 10. Dabei haben Versuche überraschend ergeben, dass der Geschwindigkeitsbereich, indem genaue Messungen möglich sind, dann am größten ist, wenn die von der kürzeren Grundseite 29 ausgehenden Seiten der trapezförmigen Form in Bezug auf die Hauptströmungslinie HSL in einem Bereich um 45° angestellt sind.

Gemäß einer vorteilhaften Weiterbildung der Erfindung ist das Strömungsumlenkelement 6 so in dem Fluidkanal 17 angeordnet, dass zwischen einer dem Strömungsumlenkelement abgewandte Seite des Sensorchips 5 und der Wandung 4 des Fluidkanals ein freier Querschnitt 18 vorhanden ist. Auf diese Weise kann erreicht werden, dass lediglich ein geringer Teilstrom UTS des Fluidstroms FS durch den Spalt 14 zwischen der Oberfläche 2 des Sensorchips 5 und dem Umlenkelement 6 hindurch fließt. Der größere Teil GTS des Fluidstroms FS kann dabei außerhalb des Spalts 14 fließen. Hierdurch kann eine geringe energetische Beeinflussung des Fluidstroms FS erreicht werden, was zu einem geringen Strömungswiderstand und zu genauen Messergebnissen führen.

Nach einer vorteilhaften Weiterbildung der Erfindung ist das Strömungsumlenkelement 6 so in dem Fluidkanal 17 angeordnet, dass es einen Teil der Wandung 4 bildet. Auf diese Weise wird die Stabilität der Vorrichtung 1 erhöht und die Herstellung der selben vereinfacht.

Beispielsweise beträgt ein minimaler Abstand zwischen der Oberfläche 2 und dem Umlenkelement 6 wenigstens 0,5 mm, bevorzugt wenigstens 0,6 mm, besonders bevorzugt wenigstens 0,8 mm, und/oder höchstens 2,0 mm, bevorzugt höchstens 1,5 mm, besonders bevorzugt höchstens 1,2 mm. Wie Versuche überraschend gezeigt haben, können insbesondere bei der Messung eines Strömungsparameters VD eines Atemgases besonders gute Ergebnisse erreicht werden, wenn der minimale Abstand zwischen der Oberfläche 2 und dem Umlenkelement 6 in einem Bereich um 1 mm herum liegt. So können in diesem Fall hoch genaue Messwerte in einem weiten Geschwindigkeitsbereich gewonnen werden, wobei eine störende Kondensatbildung kaum auftritt.

Gemäß der Erfindung ist das Membransensorelement 12 an einem freistehenden Sensorfinger 5 ausgebildet. Hierdurch kann die energetische Beeinflussung des Fluidstroms FS ebenso wie die Gefahr einer Kondensatbildung weiter verringert werden. Im ersten Ausführungsbeispiel ist der Sensorfinger 5 durch den Sensorchip 5 selbst gebildet. Es wäre aber auch möglich, dass der freistehende Sensorfinger durch einen Träger für den Sensorchip 5, beispielsweise aus Glas, und durch den Sensorchip 5 gebildet wird.

Beispielsweise weist das Strömungsumlenkelement 6 in einem Schnitt parallel zu der Hauptströmungslinie HSL und senkrecht zu der Oberfläche 2 in Abwandlung zum ersten Ausführungsbeispiel eine dreieckförmige Form auf, wobei eine Spitze der dreieckförmigen Form der Oberfläche 2 zugewandt ist, wobei bevorzugt eine von der Spitze ausgehende Seite der dreieckförmigen Form eine parallel zu der Hauptströmungslinie HSL verlaufende Gerade unter einem Winkel α von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet. Die dreieckförmige Ausbildung des Strömungsumlenkelements 6 erleichtert ebenfalls die Herstellung der Vorrichtung und erzielt gleichzeitig ein wirbelfreies Anliegen des Teilstroms an der Oberfläche zwei des Sensorchips 5. Dabei haben Versuche überraschend ergeben, dass der Geschwindigkeitsbereich, indem genaue Messungen möglich sind, dann am größten ist, wenn die von der Spitze ausgehenden Seiten der dreieckförmigen Form in Bezug auf die Hauptströmungslinie HSL in einem Bereich um 45° angestellt sind.

Nach der Erfindung ist das Umlenkelement 6 in Abwandlung zum ersten Ausführungsbeispiel als freistehender Umlenkfinger 6 ausgebildet. Auch hierdurch kann die energetische Beeinflussung des Fluidstroms FS ebenso wie die Gefahr einer Kondensatbildung weiter verringert werden.

Fig. 2c zeigt eine fünfte Ansicht des ersten Ausführungsbeispiels einer Vorrichtung 1, wobei eine zweidimensionale längsgeschnittene Darstellung gezeigt ist. Fig. 2d zeigt eine sechste Ansicht des ersten Ausführungsbeispiels einer Vorrichtung eins, wobei eine zweidimensionale quer geschnittene Darstellung der Vorrichtung 1 der Figur 2c gezeigt ist. Anders als in den Figuren 1a, 1b, 2a und 2b fließt hier der Fluidstrom FS in einer zweiten Strömungsrichtung ST2, welche der ersten Strömungsrichtung ST1 entgegengesetzt ist.

Gemäß einer vorteilhaften Weiterbildung der Erfindung ist das Strömungsumlenkelement 6 so ausgebildet, dass der Teilstrom UTS bei der Strömungsrichtung ST1 und bei einer entgegengesetzten Strömungsrichtung ST2 schräg gegen die Oberfläche 2 gerichtet ist. Auf diese Weise wird eine Messung des Strömungsparameters VD sowohl dann möglich, wenn das Fluid in der ersten Strömungsrichtung ST1 fließt, als auch dann, wenn das Fluid in der entgegengesetzten zweiten Strömungsrichtung ST2 fließt. Die Vorrichtung ist damit für eine bidirektionale Messung geeignet.

Gemäß einer zweckmäßigen Weiterbildung der Erfindung ist das Umlenkelement 6 längs der Hauptströmungslinie HSL betrachtet mittig zum thermischen Membransensorelement 12 angeordnet. Dieses Merkmal trägt dazu bei, dass die Kennlinie des Strömungssensors 10 zumindest betragsmäßig in beiden Strömungsrichtungen ST1 und ST2 gleichartig verläuft, was die weitere Verarbeitung des elektrischen Signals des Strömungssensors vereinfacht.

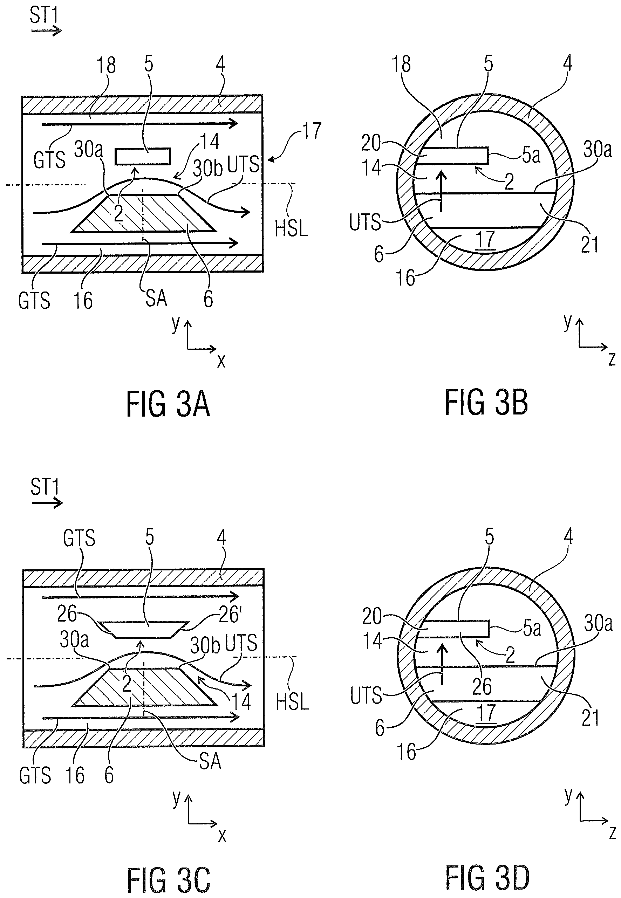

Fig. 3a zeigt eine erste Ansicht eines zweiten Ausführungsbeispiels einer Vorrichtung 1, wobei eine zweidimensionale längsgeschnittene Darstellung gezeigt ist. Fig. 3b zeigt eine zweite Ansicht des zweiten Ausführungsbeispiels einer Vorrichtung, wobei eine zweidimensionale quer geschnittene Darstellung gezeigt ist.

Gemäß einer vorteilhaften Weiterbildung der Erfindung ist das Strömungsumlenkelement 6 so in dem Fluidkanal 17 angeordnet, dass zwischen einer dem Sensorchip 5 abgewandte Seite des Strömungsumlenkelements 6 und der Wandung 4 des Fluidkanals ein freier Querschnitt 16 vorhanden ist.

Nach einer vorteilhaften Weiterbildung der Erfindung beträgt eine Summe der Querschnittsfläche 20 des Strömungssensors 10 in dem Fluidkanal 17 und der Querschnittsfläche 21 des Umlenkelements 6 in dem Fluidkanal 17 in einer Ebene senkrecht zu der Hauptströmungslinie HSL höchstens 50%, bevorzugt höchstens 30%, besonders bevorzugt höchstens 10%, der durch die Wandung 4 des Fluidkanals 17 begrenzten Querschnittsfläche. Auf diese Weise kann die energetische Beeinflussung des Fluidstroms FS auf einen tolerierbaren Wert herabgesetzt werden.

Fig. 3c zeigt eine erste Ansicht eines dritten Ausführungsbeispiels einer Vorrichtung, wobei eine zweidimensionale längsgeschnittene Darstellung gezeigt ist. Weiterhin zeigt Fig. 3d eine zweite Ansicht des dritten Ausführungsbeispiels einer Vorrichtung, wobei eine zweidimensionale quer geschnittene Darstellung gezeigt ist. Dabei ist eine dem in der ersten Strömungsrichtung ST1 fließenden Fluid zugewandte Seite 26 des Strömungssensors 10 und/oder eine dem in der zweiten Strömungsrichtung ST1 fließenden Fluid zugewandte Seite 26' des Strömungssensors 10 so geformt, dass sich der Querschnitt des Fluidkanals 17 in der jeweiligen Strömungsrichtung ST1; ST2 verengt. Auf diese Weise kann eine geringe energetische Beeinflussung des Fluidstroms erreicht werden, was zu einem geringen Strömungswiderstand und zu genauen Messergebnissen führen. Ansonsten entspricht das dritte Ausführungsbeispiel dem zweiten Ausführungsbeispiel.

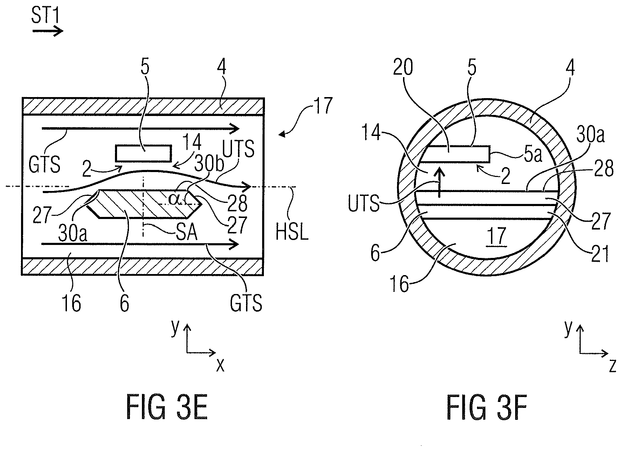

Fig. 3e zeigt eine erste Ansicht eines vierten Ausführungsbeispiels einer Vorrichtung, wobei eine zweidimensionale längsgeschnittene Darstellung gezeigt ist. Weiterhin zeigt Fig. 3f eine zweite Ansicht des vierten Ausführungsbeispiels einer Vorrichtung, wobei eine zweidimensionale quer geschnittene Darstellung gezeigt ist. Beispielsweise weist im vierten Ausführungsbeispiel das Strömungsumlenkelement 6 in einem Schnitt parallel zu der Hauptströmungslinie HSL und senkrecht zu der Oberfläche 2 eine sechseckförmige Form auf, wobei eine erste Seite 28 der sechseckförmigen Form parallel zu der Oberfläche 2 ausgebildet und der Oberfläche 2 zugewandt ist, wobei bevorzugt eine von der ersten Seite 28 ausgehende Seite 27 der sechseckförmigen Form eine parallel zu der Hauptströmungslinie HSL verlaufende Gerade unter einem Winkel α von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet. Im Übrigen entspricht das vierte Ausführungsbeispiel dem zweiten Ausführungsbeispiel.

Auch die sechseckförmige Ausbildung des Strömungsumlenkelements 6 erleichtert die Herstellung der Vorrichtung und erzielt gleichzeitig ein wirbelfreies Anliegen des Teilstroms an der Oberfläche 2 des Sensors 10. Auch dabei haben Versuche überraschend ergeben, dass der Geschwindigkeitsbereich, indem genaue Messungen möglich sind, dann am größten ist, wenn die von der parallel zu der Oberfläche ausgebildeten und der Oberfläche zugewandten Seite 28 ausgehenden Seiten 27 der sechseckförmigen Form in Bezug auf die Hauptströmungslinie HSL in einem Bereich um 45° angestellt sind.

Nach einem nicht gezeigten Beispiel weist das Strömungsumlenkelement 6 in einem Schnitt parallel zu der Hauptströmungslinie HSL und senkrecht zu der Oberfläche 2 eine rautenförmige Form auf, wobei eine Spitze der rautenförmigen Form der Oberfläche 2 zugewandt ist, wobei bevorzugt eine von der Spitze ausgehende Seite der rautenförmigen Form eine parallel zu der Hauptströmungslinie HSL verlaufende Gerade unter einem Winkel α von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet. Auch dabei haben Versuche überraschend ergeben, dass der Geschwindigkeitsbereich, indem genaue Messungen möglich sind, dann am größten ist, wenn die von der Spitze ausgehenden Seiten der rautenförmigen Form in Bezug auf die Hauptströmungslinie in einem Bereich um 45° angestellt sind. Die rautenförmige Form ergibt sich grundsätzlich, wenn die im vierten Ausführungsbeispiel parallel zur Hauptströmungslinie HSL angeordneten Seiten der sechseckförmigen Form weggelassen werden.

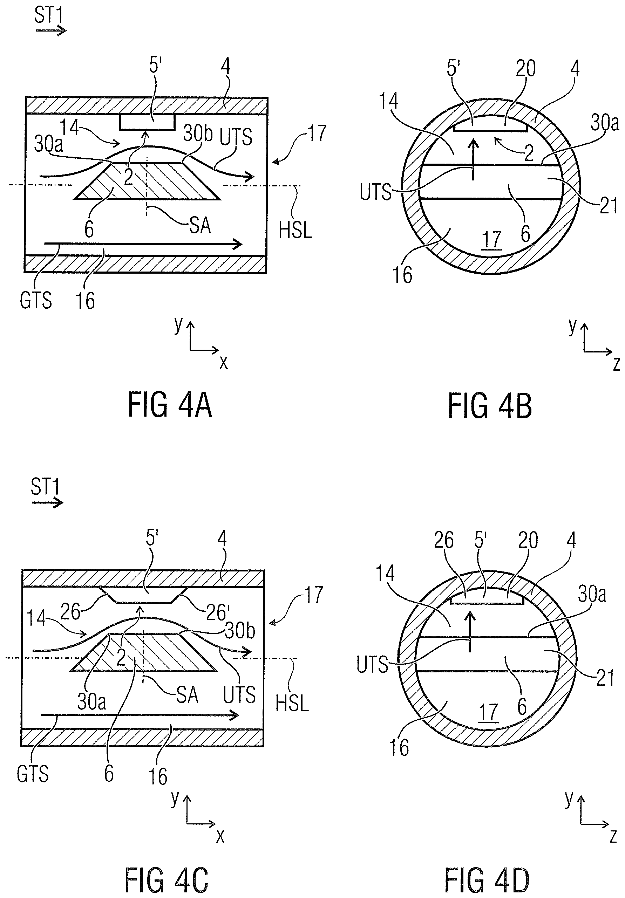

Fig. 4a zeigt eine erste Ansicht eines fünften Ausführungsbeispiels einer Vorrichtung 1, wobei eine zweidimensionale längsgeschnittene Darstellung gezeigt ist. Fig. 4b zeigt eine zweite Ansicht des fünften Ausführungsbeispiels einer Vorrichtung 1, wobei eine zweidimensionale quer geschnittene Darstellung gezeigt ist.

Nach einer vorteilhaften Weiterbildung der Erfindung ist der Sensorchip 5 so in dem Fluidkanal 17 angeordnet, dass es einen Teil der Wandung 4 bildet. Auf diese Weise wird die Stabilität der Vorrichtung erhöht und die Herstellung der selben vereinfacht.

Fig. 4c zeigt eine erste Ansicht eines sechsten Ausführungsbeispiels einer Vorrichtung, wobei eine zweidimensionale längsgeschnittene Darstellung gezeigt ist. Weiterhin zeigt Fig. 4d eine zweite Ansicht des sechsten Ausführungsbeispiels einer Vorrichtung, wobei eine zweidimensionale quer geschnittene Darstellung gezeigt ist. Dabei ist eine dem in der ersten Strömungsrichtung ST1 fließenden Fluid zugewandte Seite 26 des Strömungssensors 10 und/oder eine dem in der zweiten Strömungsrichtung ST1 fließenden Fluid zugewandte Seite 26' des Strömungssensors 10 so geformt, dass sich der Querschnitt des Fluidkanals 17 in der jeweiligen Strömungsrichtung ST1; ST2 verengt. Auf diese Weise kann eine geringe energetische Beeinflussung des Fluidstroms erreicht werden, was zu einem geringen Strömungswiderstand und zu genauen Messergebnissen führen. Ansonsten entspricht das sechste Ausführungsbeispiel dem fünften Ausführungsbeispiel.

Wie in der Figur 5 gezeigt ist, kann der Strömungssensor 10 einen Sensorchip 5 aufweisen, der an einem Messkopf 13 befestigt sein kann, der entsprechende elektrische Anschlüsse 11 aufweist, wobei beim Betrieb des Strömungssensors 10 der Sensorchip 5 mit dem thermischen Membransensorelement 12 (Figur 6) als freistehender Sensorfinger 5 von dem Fluidstrom FS umströmt wird. Der Strömungssensor 10 kann sich vom Messkopf 13 her kommend zum Sensorchip 5 verjüngen. Der Strömungssensor 10 mit dem Sensorchip kann in dem Fluidkanal 17, wie in den vorangegangenen Figuren dargestellt ist, freistehend als "Nacktchip" von dem Fluid umströmt werden, um so einen Strömungsparameter des Fluides besser, also z.B. mit einer geringeren Fehlerrate, in einem größerem Messbereich oder mit einer höherem Messdynamik, bestimmen zu können. Bei dem Strömungssensor sehen kann es sich um einen mikroelektromechanischen-Halbleiter (MEMS)- Sensor handeln. Das heißt, der Sensorchip 5 kann beispielsweise ein Silizium-Halbleiterchip 5 sein, der mikrosystemtechnisch strukturiert wurde. Denkbar ist auch der Einsatz anderer Halbleitermaterialien, wie zum Beispiel Siliziumcarbid, Galliumarsenid, Indiumphosphid usw., die in der Halbleitertechnik und in der Mikroelektromechanik eingesetzt werden. Glas, Keramik oder ähnlichen Materialien können ebenfalls als Substrat für den erfindungsgemäßen Strömungssensor bzw. Sensorchip dienen.

In Fig. 6 ist die Aufsicht eines Sensorchips 5 in einem unterschiedlichen Detaillierungsgrad der einzelnen Elemente dargestellt. Dabei zeigt die Fig. 6a die Aufsicht eines Mikroskopbildes des Sensorchips 5, und die Fig. 6b eine schematische Darstellung der Aufsicht einer Membran 9 bzw. des thermischen Membransensorelementes 12 mit den Heizern 3 und den zwei gegenüber angeordneten Temperaturfühlern 7, 7', die jeweils als Thermoelementgruppe 7, 7' ausgebildet sind. Ferner ist in der Fig. 6c eine Detailansicht einer Thermoelementgruppe 7' mit den in Reihe geschalteten Thermoelementen dargestellt.

Der Strömungssensor 10 weist einen Sensorchip 5 auf, wobei der Sensorchip 5 zumindest ein thermisches Membransensorelement 12 aufweist, das ausgebildet ist, um einen Strömungsparameter VD des Fluides zu bestimmen. Darüber hinaus kann er zusätzlich dazu ausgebildet sein, um eine Fluidtemperatur, beispielsweise eine relative Fluidtemperatur oder eine absolute Fluidtemperatur zu bestimmen. Das thermische Membransensorelement 12 weist zwei Temperaturfühler 7, 7' auf. Bei diesen Temperaturfühlern 7, 7' kann es sich beispielsweise um Thermoelemente 8, 8', um Widerstandsstreifen beispielsweise mit Platin oder Nickel oder um Gruppen von Thermoelementen 7, 7', sogenannte Thermopiles 7, 7', handeln. Das thermische Membransensorelement 12 besitzt eine Membran, die zwei zueinander beabstandete Temperaturfühler 7, 7' und ein zwischen den Temperaturfühler 7, 7' angeordnetes Heizelement 3 aufweist. Der Sensorchip 5 besitzt also ein thermisches Membransensorelement 12 mit zwei zueinander beabstandeten Temperaturfühlern 7, 7'.

Bei dem Sensorchip 5 kann es sich, wie in der Fig. 6a dargestellt ist, um einen länglich ausgebildeten Sensorfinger 5 handeln, bei dem beispielsweise die Längsseite L 6 mm beträgt und die Breite W 2 mm. In einigen Ausführungsbeispielen ist also eine Längskante des Sensorfingers bzw. des Sensorchips 5 dreimal oder noch länger als die Schmalseite W des Sensorfingers bzw. des Sensorchips 5, um das sensitive Element 12 in der Strömung FS freistehend und außerhalb des strömungstechnisch störenden Übergangs zur mechanischen Verankerung eines Messkopfs 13 platzieren zu können. Die elektrischen Zuleitungen 19 liegen an einer Stirnseite des Sensorfingers bzw. des Sensorchips 5 und sind dort mit dem Messkopf (nicht gezeigt in Fig. 6a) verbunden. Die aktiven sensorischen Elemente 12 können im ersten Drittel der Oberfläche 2 des Sensorfingers 5 am freien Ende 5a des Sensorfingers 5 angeordnet sein. Damit wird eine Strömungsmessung möglichst wenig durch die Verbindung zum Rumpf bzw. Messkopf 13 des Strömungssensors 10 beeinflusst.

In der Aufsicht von Fig. 6b ist das thermische Membransensorelement 12 mit dem dazugehörigen Heizer 3 dargestellt. Die Temperaturfühler 7 bzw. 7' sind jeweils als Thermoelementgruppen 7, 7' ausgebildet. Die Thermoelemente 8 bzw. 8' sind auf ihrer jeweiligen Seite in Reihe zusammengeschaltet und zu jeweils einem Thermopile 7, 7' zusammengefasst. Die einzelnen Thermoelemente 8 bzw. 8' bzw. die Thermopiles 7, 7' besitzen jeweils Thermoelementübergänge 8a und 8b, die auf der Sensormembran 9 angeordnet sind und jeweils dazugehörige zweite Thermoelementübergänge 8c und 8d, die auf dem Chiprahmen bzw. dem Siliziumbulk angeordnet sind. Sowohl die Heizelemente 3 als auch die Thermoelemente 8, 8' weisen entsprechende elektrische Zuleitungen 19 auf. In Fig. 6c ist eine Teilansicht des Thermopiles 7' mit den Thermoelementübergängen 8b, 8d dargestellt. Die Figur zeigt die Thermoelementübergänge 8b, die Aluminium 24 und Polysilizium 25 aufweisen und die auf der Membran 9 angeordnet sind, und zum anderen auch die Thermoelementübergänge 8d, welche ebenfalls Polysilizium 25 und Aluminium 24 aufweisen, und die auf dem Siliziumbulk bzw. Sensorchiprahmen ausgebildet sind.

Im Betrieb, wenn also der Heizer 3 die Umgebung erwärmt, werden die Thermoelementübergänge 8b des Thermopiles 7' eine höhere Temperatur T_{warm} aufweisen als die dazugehörigen Thermoelementübergänge 8d des Thermopiles 7', die eine geringere Temperatur Tₖₐₗₜ aufweisen. Die Membran 9 besitzt eine geringe thermische Masse, so dass bei Erwärmung des Heizelementes die Membran 9 relativ schnell die durch den Heizer erzeugte Temperatur annehmen wird, wohingegen die Temperatur auf dem Siliziumchip bzw. dem Sensorchiprahmen niedriger sein wird.

Nach einer zweckmäßigen Weiterbildung der Erfindung ist eine Erstreckung L des Sensorchips bzw. des Sensorfingers 5 in einer Richtung senkrecht zur Hauptströmungslinie HSL und parallel zu der Oberfläche 2 mindestens dreimal so groß, bevorzugt viermal so groß, besonders bevorzugt fünfmal so groß, als eine Erstreckung W des Sensorchips 5 bzw. Sensorfingers 5 in einer Richtung parallel zur Hauptströmungslinie HSL. Bei dem Sensorchip 5 bzw. Sensorfinger 5 kann es sich um einen länglich ausgebildeten Sensorchip 5 bzw. Sensorfinger 5 handeln, bei dem beispielsweise die senkrecht zur Hauptströmungslinie und parallel zu der Oberfläche verlaufende Längsseite 6 mm beträgt und die parallel zur Hauptströmungslinie verlaufende Breite 2 mm. In einigen Ausführungsbeispielen ist also eine Längskante des Sensorchips 5 bzw. Sensorfingers 5 dreimal oder noch länger als die Schmalseite W des Sensorchips bzw. Sensorfinger, um die sensitiven Elemente 12 in der Strömung freistehend und außerhalb des strömungstechnisch störenden Übergangs zur mechanischen Verankerung des Sensorchips bzw. Sensorfingers 5 platzieren zu können.

Gemäß einer zweckmäßigen Weiterbildung der Erfindung ist das Membransensorelement 12 in einem ersten Drittel der Oberfläche 2 an einem freien Ende 5a des Sensorchips 5 bzw. Sensorfingers 5 angeordnet, wobei das freie Ende 5a des Sensorchips 5 bzw. Sensorfingers 5 einem zweiten Ende 5b des Sensorchips 5 bzw. des Sensorfingers 5, an dem elektrische Zuleitungen 19 an den Sensorchip 5 bzw. an den Sensorfinger 5 angeschlossen sind, gegenüberliegt. Die aktiven sensorischen Elemente 12 können im ersten Drittel der Chipfläche 2 am freien Ende 5a des Sensorchips 5 bzw. Sensorchip 5 angeordnet sein. Damit wird eine Strömungsmessung möglichst wenig durch die elektrische bzw. mechanische Verbindung zum Rumpf bzw. Messkopf 13 des Sensorfingergehäuses beeinflusst.

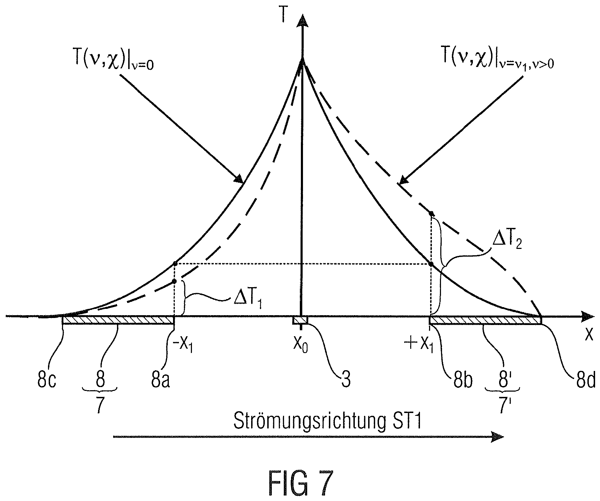

In Fig. 7 ist das Funktionsprinzip eines thermischen Strömungssensors 5 in einem Diagramm aus der Dissertation von Sven Zinober, "Redundanzstrukturen zur Erhöhung der Sicherheit und Zuverlässigkeit von Mikrosystemen", Dissertation, Albert-Ludwig-Universität Freiburg im Breisgau, 2002 gezeigt. Die durchgezogene Kurve in Fig. 7 zeigt den schematischen Temperaturverlauf entlang einer Fluidkanalwand 4 auf einer Sensorfläche 2 für ein ruhendes Medium bzw. Fluid und die gestrichelte Kurve bei einen angenommenen Durchfluss eines Fluides in der durch den Pfeil angedeuteten Strömungsrichtung ST1 von links nach rechts.

Bei einem ruhenden Medium bildet sich bei der Erwärmung der Sensormembran an der Stelle X₀ durch den Heizer 3 eine gleichmäßige abklingende Temperaturverteilung in Richtung der Thermoelemente 8 und 8' aus. Das heißt, bei einer ruhenden Strömung wird bei identischem Abstand -X₁ und ₊X₁ der Thermoelemente 8 und 8' von dem Heizer 3 eine identische Temperatur gemessen. Ruht also das Strömungsmedium, so wird die aktive Sensorfläche durch Wärmeleitung in der Membran und im Medium aufgeheizt. Die entsprechende Temperatur wird also von den Thermoelementen 8, 8' detektiert. Bei einer einsetzenden Strömung in der durch den Pfeil angedeuteten Strömungsrichtung bildet sich dann eine Temperaturverteilung aus wie sie durch die gestrichelte Kurve dargestellt ist. Bei Strömung wird also das Wärmeverteilungsfeld in Richtung des der Strömung abgewandten Thermoelementes 8' verschoben.

Fig. 7 zeigt also den schematischen Temperaturverlauf auf der Sensorebene mit den zwei Thermoelementen 8,8'und der dazwischen angeordneten Heizung 3 und der Verschiebung dieses Verlaufs in Abhängigkeit von der Strömungsgeschwindigkeit des darüber hinweg strömenden Fluides, wobei in Fig. 7 der Fall gezeigt ist, dass der Heizer 3 auf eine konstante Temperatur geheizt wird (auch als Konstant-Temperatur-Anemometrie, CTA, bezeichnet). Entsprechend den Anforderungen oder dem zu messenden Strömungsparameter kann der Heizer 3 auch auf unterschiedliche Weise, also mit konstanter Leistung, konstanter Spannung oder konstantem Strom (Konstant-Strom-Anemometrie, CCA), oder z.B. periodisch oder gepulst, geheizt werden. Ein Messkopf mit einem freistehenden Sensorfinger kann also so in einem strömenden Fluid angeordnet sein, dass das strömende Fluid zuerst ein erstes Thermoelement 8 umströmt, danach den Heizer 3 und weiter das zweite Thermoelement 8' umströmt.

Die Temperaturdifferenzen ΔT₁ und ΔT₂ geben den Unterschied zwischen dem zum Heizer 3 zugewandten jeweiligen heißen Kontakten 8a, 8b der Thermoelemente 8, 8' und dem vom Heizer 3 abgewandten Enden 8c, 8d der Thermoelemente 8, 8', die sich auf dem Siliziumbulk befinden und damit als kalter Kontakt bezeichnet werden kann. ΔT₁ ist die Temperaturdifferenz am Upstream-(Stromaufwärts) Sensor 8 und ΔT₂ am Downstream- (Stromabwärts) Sensor 8'. Ruht das Strömungsmedium, so wird die aktive Sensorfläche durch Wärmeleitung in der Membran und dem Medium aufgeheizt. Bei einsetzender Strömung, hier in Strömungsrichtung von links nach rechts wird dieses Wärmeverteilungsfeld nach rechts verschoben. Die Thermoelemente 8, 8' können wieder in Reihe geschaltet zu Thermopiles 7, 7' zusammengefasst werden. Das Strömungs-Medium oder Fluid erreicht also zunächst das Upstream-Thermopile 7, kühlt dieses, wird danach am Heizer 3 erwärmt und führt diese Wärme mit. Dadurch werden die heißen Kontakte 8b des strömungsabgewandten Downstream-Thermopiles 7' stärker aufgeheizt. Die Differenz der Temperaturunterschiede an den Thermopiles 7, 7', also ΔT₂ - ΔT₁ ist dann der von der Strömungsgeschwindigkeit abhängige Temperaturunterschied zwischen dem Downstream-Thermopile 7' und dem Upstream-Thermopile 7. Es kann also das Temperaturprofil zwischen der Membranmitte mit dem Heizer und dem Siliziumbulk gemessen werden.

Mit dem obigen Messprinzip lassen sich Strömungssensoren 10 mit hoher Dynamik, z.B. von 1:10 bis 1:10000, z.B. also von 1:1000 bauen. Der Strömungssensor 10 sollte bei Anwendung für Flüssigkeitsmessungen eine dichte Passivierung der Thermopile-Strukturen und deren Zuleitungen aufweisen, um so einen elektrischen Kurzschluss der aktiven Sensorelemente zu vermeiden. Der Strömungssensor 10 ist für Gase und Flüssigkeiten oder allgemein Fluide z.B. sowohl in einem Anemometer als auch in einem Kalorimeterbetrieb einsetzbar.

Die Fig. 8 zeigt ein Diagramm simulatorisch ermittelter Kennlinien unterschiedliche Ausführungsbeispiele der erfindungsgemäßen Vorrichtung.

Das Diagramm der Figur 8 zeigt die Werte des elektrischen Signals ΔTP in Millivolt (mV) eines Strömungssensors 10 einer beispielhaften Vorrichtung 1 in Abhängigkeit von einem Volumendurchfluss VD in Standardlitern pro Minute (slpm), was einer Funktionen ΔTP (VD) entspricht. Dabei sind die Werte des elektrischen Signals ΔTP als Differenz zu einem Wert, der ohne Strömung gemessen wird, dargestellt.

Eine erste Kennlinie ΔTP1 bezieht sich dabei auf eine Simulation der Vorrichtung 1 des ersten Ausführungsbeispiels, wobei die Flanken des trapezförmigen Umlenkelements 6 um 45° angestellt sind. Eine zweite Kennlinie ΔTP2 bezieht sich dabei auf eine Simulation der Vorrichtung 1 des ersten Ausführungsbeispiels, wobei die Flanken des trapezförmigen Umlenkelements 6 um 21° angestellt sind. Eine rechte Seite des Diagramms gilt dabei für den Fall, dass die Fluidströmung FS in der ersten Strömungsrichtung ST1 fließt. Hingegen gilt eine rechte Seite des Diagramms für den Fall, dass die Fluidströmung FS in den gegen gesetzte Strömungsrichtung ST2 fließt. Die Richtung wird dabei durch das Vorzeichen des Volumendurchflusses VD und des elektrischen Signals ΔTP dargestellt.

Die Kennlinien ΔTP1 und ΔTP2 sind dabei im Wesentlichen punktsymmetrisch zum Nullpunkt.

Während der Messbereich bei einem Umlenkelement 6 mit um 21° angestellten Flanken lediglich von etwa -125 slpm bis etwa ₊125 slpm reicht, erstreckt sich der Messbereich bei einem Umlenkelement 6 mit um 45° angestellten Flanken von etwa -300 slpm bis etwa ₊300 slpm. Der Messbereich ist dabei jener Bereich, in dem aus der Funktion ΔTP (VD) eine eindeutige Umkehrfunktion VD (ΔTP) gebildet werden kann.

Die vorliegende Erfindung umfasst in einem Ausführungsbeispiel eine Vorrichtung 1 mit einer gerichteten Anströmung des freistehenden Sensorfingers 5 für die bidirektionale Messung feuchter Gase im Hauptstrom FS, die in einem äußerlich geraden Messkanal 17 liegt, welcher nach gegenwärtigem Stand in der Praxis als Strömungsmessvorrichtung 1 bevorzugt wird.

Da mit dem in den Hauptstrom FS eingetauchten MEMS Strömungssensor 10 in einer rohrgebundenen Messstrecke nur punktuell, d.h. an einem Ort, vorzugsweise in Rohrmitte, des Rohrquerschnitts gemessen wird, muss eine gleichbleibende Verteilung des Strömungs-Geschwindigkeitsprofils über dem Rohrquerschnitt im gesamten Messbereich gewährleistet sein, um aus der lokalen Messinformation am Sensor 5 auf den Durchfluss im gesamten Rohrquerschnitt rückschließen zu können und gleichzeitig die geforderte Messgenauigkeit erreichen zu können.

Die Messstrecke kann mit ihrer Ausführung zu einer Glättung des Strömungsprofils beitragen, was beispielsweise durch eine Verengung des Rohrquerschnittes in Venturi-Form und durch den Einbau von zusätzlichen Strömungs-Gleichrichtern, wie Gitter, Siebe oder Wabenstrukturen, erfolgen kann.

Deshalb wird in einem Ausführungsbeispiel der Erfindung folgende Lösung zum Einbau des Sensorfingers in ein gerades Rohr vorgeschlagen: Einseitige Verengung des Strömungskanals durch eine keilförmige Kante mit 45° Flanken, die oberhalb ihrer Abrisskante eine gerichtete Spaltenströmung erzeugt. In einem definierten Abstand gegenüber der keilförmigen Kante kann der längs zur Hauptströmung FS stehende Sensorfinger 5 symmetrisch und planparallel zu seiner Längsachse platziert werden, so dass dessen sensitive Fläche 2 mit dem über die Flanke schräg abgelenkten Medium definiert angeströmt wird. Dadurch wird die gewünschte Spaltenströmung UTS über dem Sensor 5 erreicht, ohne die Hauptströmung FS wie beispielsweise durch eine 90° Umlenkung (energetisch) zu stark zu beeinflussen und unerwünschte Turbulenzen zu erzeugen.

Im Gegensatz zu einer Strömungsführung in einem Rohr-in-Rohr Bypass (dem oben aufgeführten Kammerkopf), mit dem die gewünschte Spaltenströmung ebenfalls erzeugt wird, besitzt die hier vorgeschlagene Messvorrichtung keine Seitenwände, die (Wasser-) Tropfen kapillar zurückhalten könnten. Vielmehr können Tropfen in der seitlich offenen Struktur hinaus laufen oder abtropfen. Die thermische Masse bleibt dabei auf das Minimum reduziert, da sich nur ein Teil des Sensorchips im Gehäuse befindet, so dass eine geringe thermische Leistung ausreicht, um den Sensor über den Taupunkt zu temperieren.

Die Messvorrichtung 1 zur Bestimmung eines Strömungsparameters VD eines Fluides FS kann folgende Merkmale aufweisen:
Mittensymmetrische Platzierung einer (bevorzugt) keilförmigen Strömungsführung 6 über den sensitiven Elementen 12 eines Strömungssensors 10, die geeignet ist, um die gewünschte planparallele Spaltenströmung UTS über der Grenzschicht der Sensorfläche 2 zu erzeugen;
wobei die Strömungsführung 6 so ausgeführt sein kann, dass sie bidirektional in beiden Rohrrichtungen ST1, ST2 angeströmt und die Spaltenströmung über dem Sensorchip 5 erzeugen kann;
wobei die Strömungsführung 45° schräge Flanken aufweisen kann, jedoch auch als weiterer vorteilhafter Strömungskörper wie Rund- oder Oval-Profil entsprechend dem geforderten Strömungsmessbereich ausgebildet sein kann,
wobei die Strömungsführung 6 mit der zum Sensor 10 abgewandten Seite in die glatte Kanalwand 4 eingebaut sein kann und damit die Hauptströmung FS im Sinne einer (einseitigen) Kanalverengung beschleunigen und ausrichten kann,
wobei die Strömungsführung 6 auch in Kanalmitte als Bypass im Hauptkanal 17 gemeinsam mit dem Sensorchip 5 freistehend angeordnet sein kann und damit eine eigene sensorische Baugruppe darstellen kann,
wobei der Sensorchip 5 selbst in die Kanalwand 4 eben eingebaut sein kann und die bevorzugte Strömungsführung ebenfalls als Bypass-Aufteilung beabstandet zur Sensoroberfläche 2 frei im Hauptkanal stehen kann,
wobei der Sensorchip 5 in einem definierten Abstand gegenüber der Strömungsführung 6 längs zur Hauptströmung FS symmetrisch und planparallel zu seiner Längsachse platziert sein kann und dessen sensitive Fläche 2 mit dem über die Flanken der Strömungsführung 6 schräg abgelenkten Medium definiert angeströmt sein kann,
wobei die gewünschte Spaltenströmung über dem Sensorchip 5 erreicht werden kann, ohne die Hauptströmung FS energetisch zu stark zu beeinflussen und ohne unerwünschte Turbulenzen zu erzeugen.

Die Vorrichtung 1 zur Bestimmung eines Strömungsparameters VD eines Fluides FS kann weiterhin folgende Merkmale aufweisen:
einen Sensorchip 5, mit einem thermischen Membransensorelement 12, das ausgebildet ist, um den Strömungsparameter des Fluides FS in einem Messbereich zu bestimmen und/oder um eine Fluidtemperatur des Fluides FS zu bestimmen;
wobei das thermische Membransensorelement 12 zwei zueinander beabstandete Thermoelementübergänge 8, 8' und ein zwischen den Thermoelementübergängen angeordnetes Heizelement 3 aufweisen kann;
wobei der Sensorchip 5 ausgebildet sein kann, um beim Betrieb des Strömungssensors als freistehender Sensorfinger von dem Fluid FS umströmt zu werden;
wobei der Sensorchip 5 an einem Messkopf 13 freistehend befestigt sein kann; und
wobei eine Länge L des Sensorchips 5 mindestens dreimal so lang wie eine Breite W des Sensorchips 5 sein kann, so dass das Membransensorelement 12 in der Strömung freistehend und außerhalb eines strömungstechnisch störenden Übergangs zu einer mechanischen Verankerung des Messkopfs 13 platziert sein kann;
wobei das Membransensorelement 12 in einem ersten Drittel der Chipfläche 2 an einem ersten Ende 5a des Sensorchips 5 angeordnet sein kann, und wobei das erste Ende 5a des Sensorchips einem zweiten Ende 5b des Sensorchips 5, an dem elektrische Zuleitungen 19 mit dem Messkopf 13 verbunden sind, gegenüber liegen kann; und
wobei der Strömungsparameter VD eine Strömungsmenge, ein Massendurchfluss, ein Volumendurchfluss VD, eine Strömungsgeschwindigkeit, eine Strömungsrichtung, eine Fluidtemperatur oder ein Fluidzustandsparameter sein kann.

### Bezugszeichenliste:

- 1: Vorrichtung zur Bestimmung eines Strömungsparameters eines Fluidstroms
- 2: Oberfläche des Sensorchips
- 3: Heizelement
- 4: Wandung
- 5: Sensorchip, Sensorfinger
- 5a: freies Ende
- 5b: befestigtes Ende
- 6: Strömungsumlenkelement
- 7: erster Temperaturfühler, erste Thermoelementgruppe
- 7': zweiter Temperaturfühler, zweite Thermoelementgruppe
- 8: erste Thermoelemente
- 8': zweite Thermoelemente
- 8a: heißer Kontakt des ersten Thermoelements
- 8b: heißer Kontakt des zweiten Thermoelements
- 8c: kalter Kontakt des ersten Thermoelements
- 8d: kalter Kontakt des zweiten Thermoelements
- 9: Membran
- 10: Strömungssensor
- 11: elektrische Anschlüsse
- 12: thermisches Membransensorelement
- 13: Messkopf
- 14: Spalt
- 15: Seite der trapezförmigen Form
- 16: freier Querschnitt
- 17: Fluidkanal
- 18: freier Querschnitt
- 19: elektrische Zuleitungen
- 20: Querschnittsfläche des Strömungssensors in dem Fluidkanal
- 21: Querschnittsfläche des Umlenkelements in dem Fluidkanal
- 24: Aluminium
- 25: Polysilizium
- 26: abgeschrägte Flanken
- 27: schräge Seite
- 28: parallele Seite
- 29: kürzere Grundseite
- 30a: Strömungsabrisskante
- 30b: Strömungsabrisskante

- FS: Fluidstrom
- HSL: Hauptströmungslinie
- UTS: umgelenkter Teilstrom
- GTS: nicht umgelenkter Teilstrom
- ST1: erste Strömungsrichtung
- ST2: zweite Strömungsrichtung
- ΔTP: elektrisches Signal
- VD: Volumendurchfluss
- SA: Symmetrieachse
- L: längere Grundseite des Sensorfingers
- W: kürzere Grundseite des Sensorfingers

## Patentansprüche

1. Vorrichtung zur Bestimmung eines Strömungsparameters (VD) eines Fluidstroms (FS), insbesondere eines Atemgasstroms, wobei der Strömungsparameter (VD) eine Strömungsmenge, ein Massendurchfluss, ein Volumendurchfluss (VD) und/oder eine Strömungsgeschwindigkeit des Fluidstroms (FS) ist,
mit einem Strömungssensor (10) zum Erzeugen eines mit dem Strömungsparameter (VD) korrespondierenden elektrischen Signals (ΔTP), der einen Sensorchip (5, 5') aufweist, der eine im Wesentlichen ebene Oberfläche (2) aufweist, an welcher ein thermisches Sensorelement (12) angeordnet ist, wobei das thermische Sensorelement (12) einen ersten Temperaturfühler (7) und einen zweiten Temperaturfühler (7') sowie ein zwischen den Temperaturfühlern (7, 7') angeordnetes Heizelement (3) aufweist,
mit einem Fluidkanal (17) mit einer Wandung (4) zum Führen des Fluidstroms in einer Strömungsrichtung (ST1), in welchem die Oberfläche (2) des Sensorchips (5, 5') angeordnet ist, wobei der Fluidkanal (17) so ausgebildet ist, dass der Fluidstrom (FS) in der Strömungsrichtung (ST1) betrachtet zu beiden Seiten des Sensorchips (5) entlang einer selben geradlinigen Hauptströmungslinie (HSL) strömt, wobei die Oberfläche (2) des Sensorchips (5, 5') parallel zu der Hauptströmungslinie (HSL) angeordnet ist, und
mit einem Strömungsumlenkelement (6), welches der Oberfläche (2) des Sensorchips (5, 5')zugeordnet ist und wenigstens einen Teilstrom (UTS) des Fluidstroms (FS) so umlenkt, dass der Teilstrom (UTS) schräg gegen die Oberfläche (2) gerichtet ist,
**dadurch gekennzeichnet,**
**dass** das Umlenkelement (6) als freistehender Umlenkfinger (6) ausgebildet ist,
**dass** das thermische Sensorelement (12) ein thermisches Membransensorelement (12) ist, und
**dass** das thermische Membransensorelement (12) an einem freistehenden Sensorfinger (5) angeordnet ist.

2. Vorrichtung nach vorstehendem Anspruch, wobei das Strömungsumlenkelement (6) wenigstens eine Strömungsabrisskante (30a, 30b) für den Teilstrom (UTS) aufweist, welche sich in einer parallel zu der Oberfläche (2) verlaufenden Ebene quer zu der Hauptströmungslinie (HSL) erstreckt.

3. Vorrichtung nach Anspruch 2, wobei die wenigstens eine Strömungsabrisskante (30a, 30b) auf einer gesamten Länge geradlinig verläuft.

4. Vorrichtung nach einem der vorstehenden Ansprüche, wobei das Strömungsumlenkelement (6) so ausgebildet ist, dass der Teilstrom (UTS) bei der Strömungsrichtung (ST1) und bei einer entgegengesetzten Strömungsrichtung (ST2) schräg gegen die Oberfläche (2) gerichtet ist.

5. Vorrichtung nach einem der vorstehenden Ansprüche, wobei ein Spalt (14) zwischen der Oberfläche (2) und dem Strömungsumlenkelement (6) in wenigstens einer Richtung senkrecht zu der Hauptströmungslinie (HSL) und parallel zu der Oberfläche (2) hin offen ist.

6. Vorrichtung nach einem der vorstehenden Ansprüche, wobei das Umlenkelement (6) längs der Hauptströmungslinie (HSL) betrachtet mittig zum thermischen Membransensorelement (12) angeordnet ist.

7. Vorrichtung nach einem der vorstehenden Ansprüche, wobei das Strömungsumlenkelement (6) in einem Schnitt parallel zu der Hauptströmungslinie (HSL) und senkrecht zu der Oberfläche (2) symmetrisch bezüglich einer senkrecht zu der Hauptströmungslinie (HSL) verlaufenden Symmetrieachse (SA) ist.

8. Vorrichtung nach einem der vorstehenden Ansprüche, wobei das Strömungsumlenkelement (6) in einem Schnitt parallel zu der Hauptströmungslinie (HSL) und senkrecht zu der Oberfläche (2) eine trapezförmige Form aufweist, wobei eine kürzere Grundseite (29) der trapezförmigen Form der Oberfläche (2) zugewandt ist, wobei bevorzugt eine von der kürzeren Grundseite (29) ausgehende Seite (15) der trapezförmigen Form eine parallel zu der Hauptströmungslinie (HSL) verlaufende Gerade unter einem Winkel (α) von wenigstens 20°, bevorzugt von wenigstens 30°, besonders bevorzugt von wenigstens 40°, und/oder von höchstens 70°, bevorzugt von höchstens 60°, besonders bevorzugt von höchstens 50°, schneidet.

9. Vorrichtung nach einem der vorstehenden Ansprüche, wobei das Strömungsumlenkelement (6) so in dem Fluidkanal (17) angeordnet ist, dass zwischen einer dem Sensorchip (5, 5') abgewandte Seite des Strömungsumlenkelements (6) und der Wandung (4) des Fluidkanals (17) ein freier Querschnitt (16) vorhanden ist, und/oder wobei zwischen einer dem Strömungsumlenkelement (6) abgewandte Seite des Sensorchips (5, 5') und der Wandung (4) des Fluidkanals (17) ein freier Querschnitt (18) vorhanden ist.

10. Vorrichtung nach einem der vorstehenden Ansprüche, wobei das Strömungsumlenkelement (6) so in dem Fluidkanal (17) angeordnet ist, dass es einen Teil der Wandung (4) bildet, und/oder wobei der Sensorchip (5') so in dem Fluidkanal (17) angeordnet ist, dass er einen Teil der Wandung (4) bildet.

11. Vorrichtung nach einem der vorstehenden Ansprüche, wobei eine Summe der Querschnittsfläche (20) des Strömungssensors (10) in dem Fluidkanal (17) und der Querschnittsfläche (21) des Umlenkelements (6) in dem Fluidkanal (17) senkrecht zu der Hauptströmungslinie (HSL) höchstens 50%, bevorzugt höchstens 30%, besonders bevorzugt höchstens 10%, der durch die Wandung (4) des Fluidkanals (17) begrenzten Querschnittsfläche beträgt.

12. Vorrichtung nach einem der vorstehenden Ansprüche, wobei eine Erstreckung (L) des Sensorfingers (5) in einer Richtung senkrecht zur Hauptströmungslinie und parallel zu der Oberfläche mindestens dreimal so groß, bevorzugt viermal so groß, besonders bevorzugt fünfmal so groß, als eine Erstreckung (W) des Sensorfingers (5) in einer Richtung parallel zur Hauptströmungslinie ist.

13. Vorrichtung nach einem der vorstehenden Ansprüche, wobei das Membransensorelement (12) in einem ersten Drittel der Oberfläche (2) an einem freien Ende (5a) des Sensorfingers (5) angeordnet ist, und wobei das freie Ende (5a) des Sensorfingers (5) einem befestigten (5b) Ende des Sensorfingers (5), an dem elektrische Zuleitungen (19) an den Sensorfinger (5) angeschlossen sind, gegenüberliegt.

## Claims

1. A device for determining a flow parameter (VD) of a fluid flow (FS), in particular of a respiratory gas flow, wherein the flow parameter (VD) is a flow quantity, a mass flow-through, a volume flow-through (VD) and/or a flow velocity of the fluid flow (FS),
with a flow sensor (10) for generating an electrical signal (ΔTP) corresponding to the flow parameter (VD), which has a sensor chip (5, 5'), which has a substantially planar surface (2), on which a thermal sensor element (12) is arranged, wherein the thermal sensor element (12) has a first temperature probe (7) and a second temperature probe (7') as well as a heating element (3) arranged between the temperature probes (7, 7'),
with a fluid channel (17) with a wall (4) for guiding the fluid flow in a flow direction (ST1), in which the surface (2) of the sensor chip (5, 5') is arranged, wherein the fluid channel (17) is configured such that the fluid flow (FS), viewed in the flow direction (ST1), flows on both sides of the sensor chip (5) along a same straight main flow line (HSL), wherein the surface (2) of the sensor chip (5, 5') is arranged parallel to the main flow line (HSL), and
with a flow deflection element (6), which is associated to the surface (2) of the sensor chip (5, 5') and deflects at least a partial flow (UTS) of the fluid flow (FS) such that the partial flow (UTS) is directed obliquely against the surface (2),
**characterized in that**
the deflection element (6) is configured as a free-standing deflection finger (6),
the thermal sensor element (12) is a thermal membrane sensor element (12), and
the thermal membrane sensor element (12) is arranged at a free-standing sensor finger (5).

2. The device according to the preceding claim, wherein the flow deflection element (6) has at least one flow separation edge (30a, 30b) for the partial flow (UTS), which extends in a plane running parallel to the surface (2), transversely to the main flow line (HSL).

3. The device according to claim 2, wherein the at least one flow separation edge (30a, 30b) runs in a straight line over an entire length.

4. The device according to any of the preceding claims, wherein the flow deflection element (6) is configured such that the partial flow (UTS) is directed obliquely against the surface (2) in the flow direction (ST1) and in an opposite flow direction (ST2).

5. The device according to any of the preceding claims, wherein a gap (14) between the surface (2) and the flow deflection element (6) is open in at least one direction perpendicular to the main flow line (HSL) and parallel to the surface (2).

6. The device according to any of the preceding claims, wherein the deflection element (6), viewed along the main flow line (HSL), is arranged to be central with respect to the thermal membrane sensor element (12).

7. The device according to any of the preceding claims, wherein the flow deflection element (6), in a section parallel to the main flow line (HSL) and perpendicular to the surface (2), is symmetrical with respect to an axis of symmetry (SA) running perpendicular to the main flow line (HSL).

8. The device according to any of the preceding claims, wherein the flow deflection element (6), in a section parallel to the main flow line (HSL) and perpendicular to the surface (2), has a trapezoidal shape, wherein a shorter base side (29) of the trapezoidal shape faces the surface (2), wherein preferably a side (15) of the trapezoidal shape starting from the shorter base side (29) intersects a straight line running parallel to the main flow line (HSL) at an angle (α) of at least 20°, preferably of at least 30°, particularly preferably of at least 40°, and/or of at most 70°, preferably of at most 60°, particularly preferably of at most 50°.

9. The device according to any of the preceding claims, wherein the flow deflection element (6) is arranged in the fluid channel (17) such that a free cross section (16) is present between a side of the flow deflection element (6) facing away from the sensor chip (5, 5') and the wall (4) of the fluid channel (17), and/or wherein a free cross section (18) is present between a side of the sensor chip (5, 5') facing away from the flow deflection element (6) and the wall (4) of the fluid channel (17).

10. The device according to any of the preceding claims, wherein the flow deflection element (6) is arranged in the fluid channel (17) such that it forms a part of the wall (4), and/or wherein the sensor chip (5') is arranged in the fluid channel (17) such that it forms a part of the wall (4).

11. The device according to any of the preceding claims, wherein a sum of the cross-sectional area (20) of the flow sensor (10) in the fluid channel (17) and the cross-sectional area (21) of the deflection element (6) in the fluid channel (17) perpendicular to the main flow line (HSL) is at most 50%, preferably at most 30%, particularly preferably at most 10%, of the cross-sectional area delimited by the wall (4) of the fluid channel (17).

12. The device according to any of the preceding claims, wherein an extension (L) of the sensor finger (5) in a direction perpendicular to the main flow line and parallel to the surface is at least three times as large, preferably four times as large, particularly preferably five times as large, as an extension (W) of the sensor finger (5) in a direction parallel to the main flow line.

13. The device according to any of the preceding claims, wherein the membrane sensor element (12) is arranged in a first third of the surface (2) at a free end (5a) of the sensor finger (5), and wherein the free end (5a) of the sensor finger (5) is opposite a fixed (5b) end of the sensor finger (5), at which electrical supply lines (19) are connected to the sensor finger (5).

## Revendications

1. Dispositif de détermination d'un paramètre d'écoulement (VD) d'un flux de fluide (FS), en particulier d'un flux de gaz respiratoire, le paramètre d'écoulement (VD) étant une quantité d'écoulement, un débit massique, un débit volumique (VD) et/ou une vitesse d'écoulement du flux de fluide (FS),
comprenant un capteur d'écoulement (10) pour générer un signal électrique (ΔTP) correspondant au paramètre d'écoulement (VD), qui présente une puce de capteur (5, 5') qui présente une surface (2) sensiblement plane sur laquelle est disposé un élément de capteur thermique (12), l'élément de capteur thermique (12) présentant une première sonde de température (7) et une deuxième sonde de température (7') ainsi qu'un élément chauffant (3) disposé entre les sondes de température (7, 7'),
comprenant un canal de fluide (17) avec une paroi (4) pour guider le flux de fluide dans une direction d'écoulement (ST1), dans lequel est disposée la surface (2) de la puce de capteur (5, 5'), le canal de fluide (17) étant réalisé de telle sorte que le flux de fluide (FS), vu dans la direction d'écoulement (ST1), s'écoule des deux côtés de la puce de capteur (5) le long d'une même ligne d'écoulement principale (HSL) rectiligne, la surface (2) de la puce de capteur (5, 5') étant disposée parallèlement à la ligne d'écoulement principale (HSL), et
comprenant un élément de déviation d'écoulement (6) qui est associé à la surface (2) de la puce de capteur (5, 5') et dévie au moins un flux partiel (UTS) du flux de fluide (FS) de telle sorte que le flux partiel (UTS) soit dirigé obliquement contre la surface (2),
**caractérisé en ce que**
l'élément de déviation (6) est réalisé sous forme de doigt de déviation (6) libre,
**en ce que** l'élément de capteur thermique (12) est un élément de capteur à membrane thermique (12), et
**en ce que** l'élément de capteur à membrane thermique (12) est disposé sur un doigt de capteur (5) libre.

2. Dispositif selon la revendication précédente, dans lequel l'élément de déviation d'écoulement (6) présente au moins une arête de rupture d'écoulement (30a, 30b) pour le flux partiel (UTS), qui s'étend dans un plan s'étendant parallèlement à la surface (2) transversalement à la ligne d'écoulement principale (HSL).

3. Dispositif selon la revendication 2, dans lequel l'au moins une arête de rupture d'écoulement (30a, 30b) s'étend de manière rectiligne sur toute une longueur.

4. Dispositif selon l'une quelconque des revendications précédentes, dans lequel l'élément de déviation d'écoulement (6) est réalisé de telle sorte que le flux partiel (UTS) soit dirigé obliquement contre la surface (2) dans la direction d'écoulement (ST1) et dans une direction d'écoulement (ST2) opposée.

5. Dispositif selon l'une quelconque des revendications précédentes, dans lequel une fente (14) entre la surface (2) et l'élément de déviation d'écoulement (6) est ouverte dans au moins une direction perpendiculaire à la ligne d'écoulement principale (HSL) et parallèlement à la surface (2).

6. Dispositif selon l'une quelconque des revendications précédentes, dans lequel l'élément de déviation (6), vu le long de la ligne d'écoulement principale (HSL), est disposé au centre de l'élément de capteur à membrane thermique (12).

7. Dispositif selon l'une quelconque des revendications précédentes, dans lequel l'élément de déviation d'écoulement (6), dans une coupe parallèle à la ligne d'écoulement principale (HSL) et perpendiculaire à la surface (2), est symétrique par rapport à un axe de symétrie (SA) s'étendant perpendiculairement à la ligne d'écoulement principale (HSL).

8. Dispositif selon l'une quelconque des revendications précédentes, dans lequel l'élément de déviation d'écoulement (6), dans une coupe parallèle à la ligne d'écoulement principale (HSL) et perpendiculaire à la surface (2), présente une forme trapézoïdale, un côté de base plus court (29) de la forme trapézoïdale étant tourné vers la surface (2), de préférence un côté (15) de la forme trapézoïdale partant du côté de base plus court (29) coupant une droite s'étendant parallèlement à la ligne d'écoulement principale (HSL) selon un angle (α) d'au moins 20°, de préférence d'au moins 30°, de manière particulièrement préférée d'au moins 40°, et/ou d'au plus 70°, de préférence d'au plus 60°, de manière particulièrement préférée d'au plus 50°.

9. Dispositif selon l'une quelconque des revendications précédentes, dans lequel l'élément de déviation d'écoulement (6) est disposé dans le canal de fluide (17) de telle sorte qu'une section transversale libre (16) soit présente entre un côté de l'élément de déviation d'écoulement (6) opposé à la puce de capteur (5, 5') et la paroi (4) du canal de fluide (17), et/ou une section transversale libre (18) étant présente entre un côté de la puce de capteur (5, 5') opposé à l'élément de déviation d'écoulement (6) et la paroi (4) du canal de fluide (17).

10. Dispositif selon l'une quelconque des revendications précédentes, dans lequel l'élément de déviation d'écoulement (6) est disposé dans le canal de fluide (17) de telle sorte qu'il forme une partie de la paroi (4), et/ou dans lequel la puce de capteur (5') est disposée dans le canal de fluide (17) de telle sorte qu'elle forme une partie de la paroi (4).

11. Dispositif selon l'une quelconque des revendications précédentes, dans lequel une somme de la surface de section transversale (20) du capteur d'écoulement (10) dans le canal de fluide (17) et de la surface de section transversale (21) de l'élément de déviation (6) dans le canal de fluide (17) perpendiculairement à la ligne d'écoulement principale (HSL) est d'au plus 50 %, de préférence d'au plus 30 %, de manière particulièrement préférée d'au plus 10 %, de la surface de section transversale limitée par la paroi (4) du canal de fluide (17).

12. Dispositif selon l'une quelconque des revendications précédentes, dans lequel une étendue (L) du doigt de capteur (5) dans une direction perpendiculaire à la ligne d'écoulement principale et parallèle à la surface est au moins trois fois plus grande, de préférence quatre fois plus grande, de manière particulièrement préférée cinq fois plus grande, qu'une étendue (W) du doigt de capteur (5) dans une direction parallèle à la ligne d'écoulement principale.

13. Dispositif selon l'une quelconque des revendications précédentes, dans lequel l'élément de capteur à membrane (12) est disposé dans un premier tiers de la surface (2) au niveau d'une extrémité libre (5a) du doigt de capteur (5), et dans lequel l'extrémité libre (5a) du doigt de capteur (5) est opposée à une extrémité fixée (5b) du doigt de capteur (5), au niveau de laquelle des lignes d'alimentation électriques (19) sont raccordées au doigt de capteur (5).
